(19) Europäisches Patentamt
European Patent Office
Office européen des brevets

(11) EP 3 472 252 B1

(12) FASCICULE DE BREVET EUROPEEN

(45) Date de publication et mention de la délivrance du brevet:
**01.04.2020 Bulletin 2020/14**

(21) Numéro de dépôt: **17737311.5**

(22) Date de dépôt: **20.06.2017**

(51) Int Cl.:
***C09D 183/08*** (2006.01) ***C08K 5/544*** (2006.01)
***D21H 19/32*** (2006.01)

(86) Numéro de dépôt international:
**PCT/FR2017/000122**

(87) Numéro de publication internationale:
**WO 2017/220871 (28.12.2017 Gazette 2017/52)**

# (54) PROCÉDÉ DE LUTTE CONTRE L'APPARITION DE BROUILLARD DANS UN DISPOSITIF À CYLINDRES LORS DE L'ENDUCTION DE SUPPORTS FLEXIBLES AVEC UNE COMPOSITION SILICONE LIQUIDE RÉTICULABLE

VERFAHREN ZUR VERHINDERUNG VON NEBELBILDUNG IN EINER VORRICHTUNG MIT ROLLEN WÄHREND DER BESCHICHTUNG VON FLEXIBLEN MEDIEN MIT EINER VERNETZBAREN FLÜSSIGEN SILIKONZUSAMMENSETZUNG

METHOD FOR THE PREVENTION OF MIST FORMATION IN A DEVICE COMPRISING ROLLS DURING THE COATING OF FLEXIBLE MEDIA WITH A CROSSLINKABLE LIQUID SILICONE COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2016 FR 1600987**

(43) Date de publication de la demande:
**24.04.2019 Bulletin 2019/17**

(73) Titulaires:
- **Elkem Silicones France S.A.S.**
  **69003 Lyon (FR)**
- **Centre National de la Recherche Scientifique**
  **75016 Paris (FR)**
- **Institut National Des Sciences Appliquees Lyon**
  **69621 Villeurbanne Cedex (FR)**
- **Université Claude Bernard Lyon 1**
  **69622 Villeurbanne, Cedex (FR)**
- **Université Jean Monnet Saint Etienne**
  **42023 Saint Etienne Cedex 2 (FR)**

(72) Inventeurs:
- **PIBRE, Guillaume**
  **63190 Lezoux (FR)**
- **GENEST, Aymeric**
  **69600 Oullins (FR)**
- **BENITOU, Stéphanie**
  **69560 Saint Cyr sur le Rhône (FR)**
- **FRANCES, Jean-Marc**
  **69330 Meyzieu (FR)**
- **FLEURY, Etienne**
  **69510 Soucieu en Jarrest (FR)**
- **GANACHAUD, François**
  **69150 Decines (FR)**
- **PORTINHA DE ALMEIDA, Daniel**
  **69270 Fontaines sur Saône (FR)**

(74) Mandataire: **Mekki, Boualem**
**Elkem Silicones France SAS**
**Industrial Property Department**
**55, rue des Frères Perret**
**69192 Saint Fons (FR)**

(56) Documents cités:
**WO-A1-2007/065921 WO-A1-2016/102498**
**WO-A2-2008/027494 FR-A1- 2 894 590**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 472 252 B1

Printed by Jouve, 75001 PARIS (FR)

## Description

L'invention se rapporte au domaine général de l'enduction silicone sur cylindres à grande vitesse de supports flexibles divers, tels que les feuilles de papier ou de polymère synthétique (polyoléfine, polyester...), ou bien encore de textile.

Plus précisément, l'invention concerne l'enduction de matériaux flexibles avec des compositions liquides contenant un ou plusieurs organopolysiloxanes réticulables par polyaddition, par déshydrogénocondensation, par polycondensation, par voie cationique ou par voie radicalaire de façon à former un film ou revêtement protecteur ayant notamment des propriétés d'anti-adhérence et/ou hydrophobes.

Les supports flexibles peuvent être des papiers, des cartons, des films plastiques, des films métalliques ou des textiles. Les applications de ces supports enduits de silicone sont par exemple : papier alimentaire (cuisson, emballage), étiquettes et ruban adhésif, bandes transporteuses, etc...

L'enduction de ces supports flexibles avec des silicones liquides réticulables est réalisée sur des dispositifs d'enduction fonctionnant en continu, et à très grande vitesse. Ces dispositifs comportent des têtes d'enduction constituées de plusieurs cylindres dont notamment un cylindre presseur et un cylindre enducteur, lequel est alimenté en continu en composition silicone liquide réticulable, au moyen d'une série de cylindres accolés les uns aux autres. La bande de support flexible circule à grande vitesse entre le cylindre presseur et le cylindre enducteur pour être enduite sur au moins une de ses faces d'un film silicone destiné à réticuler par l'intermédiaire de moyens de réticulation disposés en aval de la tête d'enduction. Ces moyens de réticulation peuvent être par exemple des émetteurs de chaleur, de radiations (par exemple ultraviolet) ou de faisceaux d'électrons.

Dans la course à la productivité, les fabricants de supports flexibles revêtus de silicone anti-adhérent sont demandeurs de formulations silicone liquides d'enduction, adaptées à des vitesses linéaires de défilement de la bande de supports flexibles de plus en plus élevées. Le facteur économique n'est évidement pas anodin dans cette recherche de nouvelles formulations silicone pour enduction à grande vitesse.

Or, on sait que les grandes vitesses sur des machines d'enduction en continu, sont synonymes de problèmes de transfert du film liquide silicone du cylindre enducteur sur la bande de support flexible défilante. Ces problèmes de transfert ("splitting" en anglais) se traduisent notamment par l'apparition d'un brouillard ou d'un aérosol ("misting" ou "fogging"en anglais) dans l'environnement de la tête d'enduction et, plus particulièrement, au niveau des contacts entre les cylindres en rotation et/ou entre le cylindre enducteur et le support flexible à enduire. La densité de ce brouillard ou de cet aérosol augmente lorsque la vitesse linéaire de défilement et donc la vitesse de rotation des cylindres augmente.

Ce phénomène a pour conséquence tout d'abord une perte de consommable, et surtout un dépôt de gouttelettes de liquide d'enduction sur le support en aval (par exemple au niveau du four), ce qui nuit à la qualité du revêtement.

En outre, cette formation indésirable de brouillard a des conséquences néfastes sur le plan de l'hygiène industrielle et de la sécurité des opérateurs, qui sont exposés au voisinage du dispositif d'enduction à cylindres, à une forte teneur en aérosol. Cela peut s'avérer nocif.

Par ailleurs, le brouillard provoque l'encrassement rapide du dispositif d'enduction à cylindres, d'où des contraintes d'entretien et une usure prématurée.

Pour se prémunir des conséquences de ce brouillard, on dispose en général autour de la tête d'enduction, un système d'aspiration permettant de capter ledit brouillard.

Par ailleurs, l'homme du métier connaît un certain nombre de réglages de la tête d'enduction pour contrecarrer ce phénomène. On en citera quelques exemples ci-après :

A. baisser la vitesse au détriment de la productivité ;

B. diminuer le taux de dépôt de silicone au détriment des propriétés du support flexible siliconé que l'on cherche à obtenir (aspect, couverture, anti-adhérence, propriétés mécaniques) ;

C. augmentation de la différence entre la vitesse tangentielle du cylindre enducteur et la vitesse linéaire du papier. Mais au-delà d'un certain différentiel, l'homogénéité de la couche enduite est gravement perturbée. De plus, cela permet de réduire la densité du brouillard sans pour autant l'annihiler suffisamment pour permettre une augmentation significative de la vitesse d'enduction ;

D. augmentation de la pression entre le cylindre enducteur et le cylindre presseur; là encore dans une certaine limite et sans suppression intéressante du phénomène de formation de brouillard.

Une autre approche pour lutter contre la formation de brouillard dans les machines d'enduction à cylindres, consiste à agir sur la formulation de la composition silicone liquide d'enduction.

Selon cette approche, il est connu de réduire le degré de polymérisation moyen en nombre des organopolysiloxanes constituant le liquide d'enduction silicone et, par voie de conséquence, de réduire la viscosité du bain d'enduction silicone pour limiter la densité du brouillard.

Ces méthodes connues souffrent d'un grave inconvénient qui est de modifier sensiblement les propriétés et,

notamment, l'anti-adhérence du support flexible siliconé que l'on cherche à obtenir.

A titre d'illustration de cette approche au travers de la formulation silicone, on peut citer la demande de brevet internationale WO 2004/046248 qui décrit l'utilisation de polymères silicone en étoile utilisés en tant qu'additif antibrouillard pour des applications de revêtement sur des supports flexibles. Le procédé de préparation de ces polymères silicones étoiles consiste à faire réagir (par hydrosilylation) de manière incomplète un organopolysiloxane comprenant des motifs réactifs ≡SiH avec une oléfine à longue chaîne afin d'obtenir un polyhydrogénoorganosiloxane partiellement substituée que l'on fait ensuite réagir par hydrosilylation avec une résine silicone vinylée de type MQ et une dioléfine à longue chaîne. Il est clair que de telles compositions sont relativement complexes et donc coûteuses à obtenir. Par ailleurs, elles restent encore perfectibles en ce qui concerne la lutte contre la formation de brouillard dans l'enduction silicone sur cylindres, à grande vitesse.

Le brevet européen EP-0 716115 décrit un procédé de fabrication d'une composition silicone d'enduction, cette composition étant présentée comme permettant la réduction de la densité de brouillard. Selon ce procédé, on met en oeuvre un polydiméthyl-méthylhydrogénosiloxane à extrémités triméthylsilyle de degré de polymérisation égale à 12, ainsi que 0,01% d'un polydiméthylsiloxane substitué par des fonctions perfluo-éthylbutyle et méthylvinyle, dont les extrémités sont du type diméthylvinylsiloxyle et de degré de polymérisation égale à 300, ainsi que du polypropylèneglycol et éventuellement un alcool stéarique ou oléique. Cela conduit à des polydiméthylsiloxanes fonctionnalisés par des groupements de polyoxy-propylène. Ces polydiméthylsiloxanes fonctionnalisés sont associés avec d'autres polydiméthylsiloxanes fonctionnalisés, e.g. par des motifs héxènyles ainsi qu'avec un catalyseur d'hydrosilylation à base de platine, pour former des compositions silicone d'enduction permettant de réduire la formation de brouillard. Les motifs de fonctionnalisation peuvent être des restes hydrophobes tels que des restes d'acide stéarique ou oléique.

Le brevet américain US-4 806 391 concerne des encres et des vernis à base de silicone, et plus précisément un procédé d'application de ces encres/vernis sur un substrat, à l'aide de machine d'enduction à rouleau fonctionnant à grande vitesse. Ce brevet divulgue notamment des compositions comprenant des polydiméthylsiloxanes à extrémités vinylées de viscosité à 25°C comprise entre 15000 et 50000 mPa.s. Ces compositions liquides d'enduction comprennent également un catalyseur à base de platine et un additif rhéologique constitué par de la silice à haute surface spécifique, en particulier de la silice de combustion.

Le brevet américain US-6 057 033 divulgue des compositions silicones destinées à être enduites sur des supports flexibles pour former après réticulation par voie cationique sous UV à un revêtement anti-adhérent. En plus des organopolysiloxanes, ces compositions comprennent des fibres de cellulose ayant une longueur moyenne comprise entre 15 et 100 μm et une épaisseur moyenne comprise entre 5 et 40μm. Les organopolysiloxanes mis en oeuvre sont des organopolysiloxanes fonctionnalisés par des groupements de réticulation du type acryloxy ou méthacryloxy, permettant la réticulation par voie radicalaire sous UV. Les fibres de cellulose incorporées dans la composition permettent d'apporter une solution au problème technique qui est d'obtenir un revêtement silicone anti-adhérent réticulé non cassant. Les fibres de cellulose sont présentées comme procurant des améliorations en ce qui concerne le transfert du film de silicone d'enduction sur le support, la résistance au découpage, les propriétés mécaniques (résistance à la tension et à la déchirure), la fixation du revêtement sur le papier, la diminution de l'absorption du liquide d'enduction au sein du papier, et accessoirement la réduction de la formation de brouillard. Sur ce dernier point, le brevet US 6 057 033 ne fournit aucun élément quantitatif d'appréciation de la réduction de brouillard entraîné par les fibres cellulosiques. Il y a tout lieu de penser que cette réduction demeure tout à fait insuffisante.

Dans un tel état de la technique, l'un des objectifs essentiels de l'invention est de proposer un procédé efficace de lutte contre l'apparition de brouillard lors de l'enduction de supports flexibles avec une composition silicone liquide précurseur de revêtements réticulés, cette enduction s'opérant à l'aide d'un dispositif d'enduction à cylindre fonctionnant à grande vitesse.

Un autre objectif essentiel de l'invention est de proposer un procédé économique et simple de lutte contre l'apparition de brouillard lors de l'enduction de supports flexibles avec une composition silicone destinée à réticuler, cette enduction s'opérant dans un dispositif d'enduction à cylindres fonctionnant à grande vitesse.

Un autre objectif essentiel de l'invention est de fournir une nouvelle composition silicone liquide X précurseur de revêtement(s) silicone ne présentant qu'une faible formation de brouillard lors de l'enduction à grande vitesse sur cylindres tout en conduisant à des revêtements silicones réticulés de très bonne qualité, en particulier en termes d'accrochage et adhérence sur le support et de profil d'anti-adhérence avec une très bonne stabilité dans le temps.

Un autre objectif essentiel de l'invention est de proposer un procédé de lutte contre l'apparition de brouillard dans le cadre de l'enduction de supports flexibles, avec une composition silicone réticulable en revêtements anti-adhérents, à l'aide d'un dispositif d'enduction à cylindre,

Tous ces objectifs, parmi d'autres, sont atteints par la présente invention qui concerne tout d'abord un procédé de lutte contre l'apparition de brouillard lors de l'enduction de supports flexibles comprenant les étapes **I)** et **II)** suivantes :

**I)** la préparation d'une composition silicone liquide **X** précurseur de revêtement(s) silicone comprenant :

- au moins un organopolysiloxane **A** réticulable par polyaddition, par déshydrogénocondensation, par polycondensation, par voie cationique ou par voie radicalaire,
- éventuellement au moins un composé organosilicique réticulant **B**,
- éventuellement au moins un catalyseur ou photoamorceur **C** dont la nature est choisie suivant le type de réaction envisagée pour ledit organopolysiloxane **A,**
- éventuellement, au moins un système modulateur d'adhérence **K,** et
- éventuellement au moins un inhibiteur de réticulation **D**; et

**II)** l'enduction de ladite composition silicone liquide **X** sur un support flexible à l'aide d'un dispositif d'enduction à cylindres,

ledit procédé étant caractérisé en ce qu'à l'étape **I)** on ajoute à ladite composition silicone liquide **X** un additif antibrouillard **E** susceptible d'être obtenu en faisant réagir à une température comprise entre 10°C et 100°C :

- au moins un composé **F** choisi parmi les composés organiques comprenant au moins une fonction alcène ou alcyne dont au moins l'un des substituants est une fonction acide et les composés organiques comprenant au moins une fonction acide et au moins une fonction alcène ou alcyne dont au moins l'un des substituants est un groupe électroattracteur; et
- au moins un composé chimique comprenant au moins une fonction amine primaire ou secondaire.

Le composé chimique comprenant une fonction amine primaire ou secondaire peut être choisi parmi les composés organiques ou les composés organosiliciés. Les composés organiques comprenant une fonction amine primaire ou secondaire utiles selon l'invention peuvent être choisis parmi les amines primaires telles que n-propylamine, n-isopropylamine, n-butylamine, n-benzylamine, n-hexylamine, n-cyclohexylamine, n-octylamine, n-(2-éthylhexyl)amine, n-(2-phényléthyl)amine, n-(3-méthoxypropyl)amine, n-nonylamine, n-isononylamine, n-décylamine, n-dodécylamine, éthylènediamine et 1,3-diaminopropane et les amines secondaires telles que n,n-dipropylamine, n,n-diisopropylamine, n,n-dibutylamine, n,n-dihexylamine, n,n-dicyclohexylamine, n,n-di(2-méthoxyéthyl)amine, n,n-dioctylamine, n,n-di(2-éthylhexyl)amine, n,n-diisononylamine, n,n-di(tridécyl)amine, morpholine, piperidine, pyrrolidine, 2,2,6,6-tétraméthylpipéridine, pipérazine, n,n'-diméthyléthylènediamine, n,n'-diéthyléethylènediamine et n,n'-diisopropyléthylènediamine.

Lorsqu'il s'agit d'un composé organosilicié, le composé chimique organosilicié comprenant au moins une fonction amine primaire ou secondaire peut être un silane ou un organopolysiloxane. Selon un mode préférentiel de réalisation de l'invention le composé chimique comprenant au moins une fonction amine primaire ou secondaire est de préférence un organopolysiloxane **O** tel que défini ci-après.

Ainsi, selon un mode de réalisation préféré la présente invention concerne un procédé de lutte contre l'apparition de brouillard lors de l'enduction de supports flexibles comprenant les étapes **I)** et **II)** suivantes :

**I)** la préparation d'une composition silicone liquide **X** précurseur de revêtement(s) silicone comprenant :

au moins un organopolysiloxane **A** réticulable par polyaddition, par déshydrogénocondensation, par polycondensation, par voie cationique ou par voie radicalaire,
- éventuellement au moins un composé organosilicique réticulant **B**,
- éventuellement au moins un catalyseur ou photoamorceur **C** dont la nature est choisie suivant le type de réaction envisagée pour ledit organopolysiloxane **A**,
- éventuellement, au moins un système modulateur d'adhérence **K**, et
- éventuellement au moins un inhibiteur de réticulation D; et

**II)** l'enduction de ladite composition silicone liquide **X** sur un support flexible à l'aide d'un dispositif d'enduction à cylindres,

ledit procédé étant caractérisé en ce qu'à l'étape **I)** on ajoute à ladite composition silicone liquide **X** un additif antibrouillard **E** susceptible d'être obtenu en faisant réagir à une température comprise entre 10°C et 100°C :

- au moins un composé **F** choisi parmi les composés organiques comprenant au moins une fonction alcène ou alcyne dont au moins l'un des substituants est une fonction acide et les composés organiques comprenant au moins une fonction acide et au moins une fonction alcène ou alcyne dont au moins l'un des substituants est un groupe électroattracteur; et
- au moins un organopolysiloxane **O** choisi parmi les organopolysiloxanes comprenant des motifs siloxy (I.1) et (I.2) de formules suivantes:

$$Y_a Z^1_b SiO_{\frac{4-(a+b)}{2}} \quad (I.1) ;$$

$$Z^2_c SiO_{\frac{4-c}{2}} \quad (I.2)$$

dans lesquelles :

- a= 1 ou 2, b= 0, 1 ou 2 et a+b= 1, 2 ou 3
- c= 1, 2 ou 3
- les symboles Y, identiques ou différents, représentent un groupe fonctionnel de formule (I.3) :

$$-E^1-(NH-G)_h-(NH_2)_i \quad (I.3)$$

dans laquelle :

- h = 0 ou 1;
- i = 0 ou 1 ;
- h+i = 1 ou 2
- $E^1$ représente un radical hydrocarboné divalent aliphatique, cycloaliphatique ou aromatique comprenant de 1 à 30 atomes de carbone ; de préférence aliphatique contenant de 1 à 10 atomes de carbone ;
- lorsqu'il est présent, G représente un radical hydrocarboné aliphatique comprenant de 1 à 10 atomes de carbone, monovalent lorsque i=0 ou divalent lorsque i=1;
- les symboles $Z^1$ et $Z^2$, identiques ou différents, représentent un radical hydrocarboné monovalent ayant de 1 à 30 atomes de carbone et comprenant éventuellement une ou plusieurs insaturations et/ou un ou plusieurs atomes de fluor, un groupe hydroxyle, ou un radical-$OR^1$ avec $R^1$ qui représente un radical hydrocarboné en $C_1$-$C_{10}$ linéaire, cyclique ou ramifié, et de préférence $Z^1$ et $Z^2$ représentent un groupe hydrocarboné monovalent choisi parmi le groupe constitué par les groupes alkyles ayant de 1 à 8 atomes de carbone, les groupes alcényles ayant de 2 à 6 atomes de carbone et les groupes aryles ayant de 6 à 12 atomes de carbone comprenant éventuellement un ou plusieurs atomes de fluor, un groupe hydroxyle, ou un radical-$OR^1$ avec $R^1$ qui représente un radical hydrocarboné en $C_1$-$C1_0$ linéaire, cyclique ou ramifié, et encore plus préférentiellement choisis parmi le groupe constitué par un groupe méthyle, éthyle, propyle, 3,3,3-trifluoropropyle, vinyle, hydroxyle, éthoxyle, méthoxyle, xylyle, tolyle et phényle ;

ledit organopolysiloxane O comprenant, par molécule, au moins un motif siloxy (I.1) porteur d'au moins un groupe fonctionnel de formule (I.3).

Selon un mode de réalisation particulier, l'additif antibrouillard E tel que décrit ci-dessus est obtenu à une température de réaction comprise 10 et 90°C, et encore plus préférentiellement entre 10 et 75°C.

Un des avantages de ce procédé est de diminuer fortement (jusqu'à un facteur 1000) l'apparition de brouillard dans un système d'enduction de supports flexibles avec des compositions silicones. Il est du mérite des inventeurs d'avoir sélectionné des additifs antibrouillard **E** particulièrement efficaces. Sans vouloir se limiter à une théorie scientifique ou à un mécanisme, il semble que cette propriété de l'additif antibrouillard **E** selon l'invention est due à la nature des réactions mise en œuvre pour l'obtenir. D'une part, une réaction d'Aza-Michael est réalisée entre des liaisons NH portées par l'organopolysiloxane **O** et des fonctions alcène ou alcyne du composé **F**. D'autre part, Le composé **F** comprenant également au moins une fonction acide, le procédé de l'invention met en œuvre également une réaction acido-basique entre les fonctions amines de l'organopolysiloxane **O** et lesdites fonctions acides du composé **F**. Ces liaisons ioniques confèrent à l'additif antibrouillard **E** une structure ionique supramoléculaire et des propriétés viscoélastiques utiles pour lutter contre l'apparition de brouillard dans un système d'enduction à cylindre fonctionnant à grande vitesse. Ces propriétés viscoélastiques peuvent se caractériser par un aspect filant de l'additif antibrouillard **E**. Par "enduction... à grande vitesse", on entend par des vitesses supérieures ou égales à 100 m/min, de préférence supérieure à 300 m/min (e.g. comprises entre 500 et 1000 m/min).

La durée de la réaction entre le composé **F** et l'organopolysiloxane **O** dépend de la nature des réactifs **F** et **O**

et de la température. L'homme de l'art saura l'adapter pour obtenir la réaction entre les liaisons NH portées par l'organopolysiloxane **O** et les fonctions alcène ou alcyne du composé **F**. L'avancement de cette réaction peut être suivi par RMN $^1H$. A titre indicatif, à 50°C la durée de réaction peut être comprise entre quelques heures et plusieurs jours.

Un autre avantage de l'utilisation de cet additif antibrouillard **E** dans le procédé selon l'invention est la qualité de la réticulation par polymérisation après enduction sur les supports souples. En effet, l'évaluation de la qualité de la réticulation ou du niveau de réticulation d'un revêtement silicone se fait en évaluant le caractère huileux de la surface du revêtement en passant le doigt sur ce revêtement en sortie d'une machine d'enduction au travers d'un test métier : "smear". De plus, la cinétique de réticulation est tout à fait intéressante comme illustré par les faibles taux d'extractibles obtenus.

Un autre avantage de l'utilisation de cet additif antibrouillard **E** dans le procédé selon l'invention est que les propriétés des revêtements silicones réticulés sur les supports souples ne sont pas impactées, en particulier en termes d'adhésion sur le support et de profil d'anti-adhérence avec une bonne stabilité dans le temps.

Dans le cadre de la présente invention, dans la définition du composé **F** on entend par groupe électroattracteur, un groupe attirant à lui les électrons, c'est-à-dire un atome ou groupe d'atomes ayant une électronégativité supérieure à celle de l'hydrogène, aboutissant ainsi à des liaisons appauvries en électron. Ainsi, dans le cadre de l'invention, le groupe électroattracteur appauvrit les fonctions alcène ou alcyne en électrons, Parmi les groupes électroattracteurs on peut notamment citer les fonctions cétone, acide, amide, ester phosphonate, acide phosphonique, acide sulfonique, sulfone, ester, thioester, le groupe $NO_2$, le groupe CN, etc.

Dans le cadre de la présente demande, on entend par fonction acide notamment les fonctions acides carboxyliques, acides sulfoniques et acides phosphoniques. Ainsi et de préférence, le composé **F** de la présente invention est choisi parmi les composés organiques comprenant au moins une double ou une triple liaison carbone-carbone dont au moins l'un des substituants est une fonction acide carboxylique, acide sulfonique ou acide phosphonique ou les composés organiques comprenant au moins une fonction acide choisie parmi une fonction acide carboxylique, une fonction acide sulfonique ou une fonction acide phosphonique et au moins une double ou une triple liaison carbone-carbone dont au moins l'un des substituants est un groupe électroattracteur . Ce composé **F** peut alors réagir selon une réaction d'Aza-Michael avec des amines primaires ou secondaires tel que décrit dans la publication « Michael addition reactions in macromolecular design for emerging technologies » Progress in Polymer Science 31 (5), 487-531 (2006). De préférence, le composé **F** selon l'invention comprend au moins une double liaison carbone-carbone dont au moins l'un des substituants est une fonction acide carboxylique ou comprend au moins une fonction acide carboxylique et au moins une double liaison carbone-carbone dont au moins l'un des substituants est un groupe électroattracteur. Encore plus préférentiellement, dans le composé **F** selon l'invention au moins l'une des doubles liaisons carbone-carbone et au moins l'une des fonctions acide sont conjuguées.

Parmi ces composés, on peut citer de préférence les composés de formule (II) :

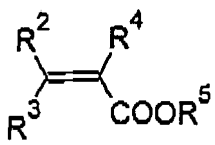 (II)

dans laquelle :

- $R^2$, $R^3$ et $R^4$, identiques ou différents, représentent un atome d'hydrogène, un groupe COOH ou un groupe alkyle en $C_1$ à $C_6$, de préférence en $C_1$ à $C_3$, de préférence méthyle ;
- $R^5$ représente un atome d'hydrogène, un groupe alkyle en $C_1$ à $C_6$ ou un groupe aryle en Ce à $C_{10}$, dans lequel l'alkyle et l'aryle comprennent au moins un groupe COOH.
- De préférence, dans les composés de formule (II), $R^2$ et $R^3$, identiques ou différents, représentent un atome d'hydrogène ou un groupe alkyle en $C_1$ à $C_6$, de préférence en $C_1$ à $C_3$, de préférence méthyle ;
- $R^4$ représente un atome d'hydrogène, un groupe alkyle en $C_1$ à $C_6$, de préférence en $C_1$ à $C_3$, de préférence méthyle, ou un groupe COOH ;
- $R^5$ représente un atome d'hydrogène, un groupe alkyle $C_1$ à $C_6$ ou un groupe aryle en $C_6$ à $C_{10}$, dans lequel l'alkyle et l'aryle comprennent au moins un groupe COOH.

De préférence, les composés **F** de l'invention sont choisis parmi le groupe constitué par l'acide acrylique, l'acide méthacrylique, l'acide itaconique, l'acide crotonique, le 2-carboxyéthylacrylate, le 3-carboxypropylacrylate, l'acide maléique, l'acide fumarique, l'acide 2-(acryloyloxy)acétique, l'acide 2-(acryloyloxy)propanoique, l'acide 3-(acrylolyloxy)propanoique, l'acide 2-(acryloyloxy)-2-phenylacétique, l'acide 4-(acryloyloxy)butanoique, l'acide 2-(acryloyloxy)-2-methylpropanoique, l'acide 5-(acryloyloxy)pentanoique, l'acide (E)-but-2-enoic, l'acide (Z)-prop-1-ene-1,2,3-tricarboxylique, l'acide cinnamique, l'acide sorbique, l'acide 2-hexenoique, l'acide 2-pentenoique, l'acide 2,4-pentadienoique, l'acide ethenesulfonique, l'acide vinylphosphonique, l'acide (1-phenylvinyl)phosphonique, l'acide 3-(vinylsulfonyl)propanoique, l'acide 2-(vinylsulfonyl)acétique, l'acide 2-(vinylsulfonyl)succinique, l'acide acétylène dicarboxylique et l'acide propiolique.
De préférence, les composés **F** de l'invention sont choisis parmi l'acide acrylique, l'acide méthacrylique, l'acide itaconique, l'acide crotonique, le 2-carboxyéthylacrylate, le 3-carboxypropylacrylate, l'acide maléique et l'acide fumarique.
De préférence, le composé **F** est l'acide (méth)acrylique ou le 2-carboxyéthylacrylate.
Encore plus préférentiellement, le composé **F** est l'acide acrylique.

L'additif antibrouillard **E** selon l'invention est mis en œuvre dans des quantités suffisantes pour réduire la quantité de misting lors de l'enduction. Bien entendu l'homme de métier, par des essais de routine, peut déterminer sans difficulté ces quantités. De préférence, l'additif antibrouillard **E** selon l'invention est mis en œuvre dans une quantité supérieure à 1,5 parties en poids et de préférence comprise entre 2 et 15 parties en poids par rapport au poids total de la composition silicone liquide X précurseur de revêtement(s) silicone.

L'organopolysiloxane **O** peut présenter une structure linéaire, ramifiée, ou cyclique. Lorsqu'il s'agit d'organopolysiloxanes linéaires, ceux-ci sont essentiellement constitués de motifs siloxy «D», notamment choisis parmi le groupe constitué par les motifs siloxy $Y_2SiO_{2/2}$, $YZ^1SiO_{2/2}$ et $Z^2{}_2SiO_{2/2}$ et de motifs siloxy « M », notamment choisis parmi le groupe constitué par les motifs siloxy $Y_3SiO_{1/2}$, $YZ^1{}_2SiO_{1/2}$, $Y_2Z^1SiO_{1/2}$ et $Z^2{}_3SiO_{1/2}$, les Y, $Z^1$ et $Z^2$ étant tels que définis ci-dessus, étant entendu que l'organopolysiloxane **O** comprend, par molécule, au moins un motif siloxy porteur d'au moins un groupe fonctionnel de formule (I.3) définie ci-dessus.
Dans un mode de réalisation particulièrement préféré, l'organopolysiloxane **O** est choisi parmi les organopolysiloxanes comprenant des motifs siloxy (I.1) et (I.2) de formules suivantes:

$$Y_aZ^1_bSiO_{\frac{4-(a+b)}{2}} \quad (I.1) \ ;$$

$$Z^2_cSiO_{\frac{4-c}{2}} \quad (I.2)$$

dans lesquelles :

- Y et $Z^1$ et $Z^2$ ont les définitions données ci-dessus ;
- a= 1 ou 2, b= 0, 1 ou 2 et a+b= 2 ou 3
- c = 2 ou 3.

De manière particulièrement préférée, l'organopolysiloxane **O** est choisi parmi les organopolysiloxanes comprenant des motifs (I.1) choisis dans le groupe constitué par $YZ^1SiO_{2/2}$ et $YZ^1{}_2SiO_{1/2}$ et des motifs (I.2) choisis dans le groupe constitué par $Z^2{}_2SiO_{2/2}$ et $Z^z{}_3SiO_{1/2}$, les Y, $Z^1$ et $Z^2$ étant tels que définis ci-dessus, étant entendu que l'organopolysiloxane **O** comprend, par molécule, au moins un motif siloxy porteur d'au moins un groupe fonctionnel de formule (I.3) définie ci-dessus.
De préférence, l'organopolysiloxane **O** présente un degré de polymérisation compris entre 2 et 5000, de préférence entre 2 et 1500, de manière plus préférée entre 2 et 500.
De préférence, l'organopolysiloxane **O** comprend un nombre de motif siloxy (I.1) compris entre 1 et 100, de préférence entre 2 et 80.
De préférence, l'organopolysiloxane **O** comprend une quantité de liaison NH/gramme comprise entre $1.10^{-5}$ et $10.10^{-2}$ mol/g, et de préférence entre $5.10^{-5}$ et $5.10^{-2}$ mol/g.
De préférence, l'organopolysiloxane **O** peut être choisi parmi les composés de formules (III), (IV), (V) et (VI) suivantes:

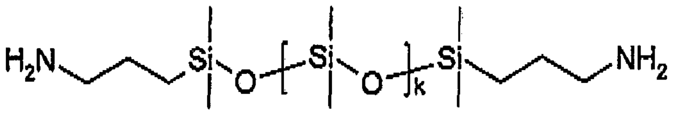

(III)

avec k= 1 à 1000, de préférence 1 à 800

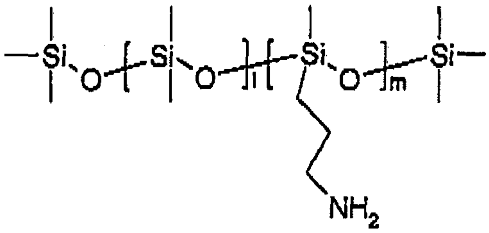

(IV)

avec l = 1 à 1000, de préférence 1 à 800 et m = 1 à 150, de préférence 1 à 100 ;

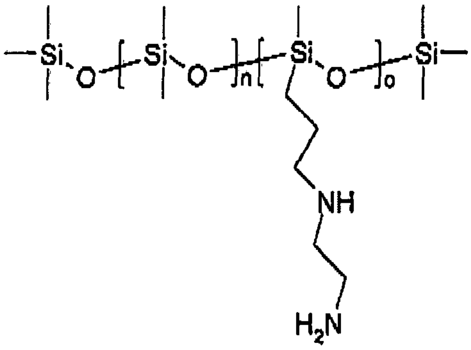

(V)

avec n = 1 à 1000, de préférence 1 à 800 et o = 1 à 150, de préférence 1 à 100 et

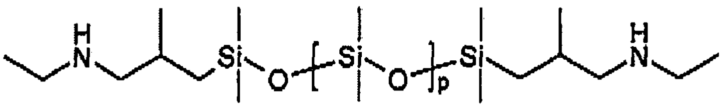

(VI)

avec p = 1 à 1000, de préférence 1 à 800.
Selon un autre mode de réalisation l'organopolysiloxane **O** peut être choisi parmi les composés de formule (IV) et (V) tels que décrits ci-dessus avec des motifs terminaux diméthylméthoxysilyl au lieu de triméthylsilyl,
Dans un mode de réalisation particulier, l'organopolysiloxane **O** peut être en émulsion.
Toutes les caractéristiques préférées définissant l'organopolysiloxane **O** peuvent être combinées entre elles.

De manière générale, on peut définir le rapport r représentant le rapport entre le nombre de moles de fonction alcène ou alcyne du composé **F** dont au moins l'un des substituants est un groupe électroattracteur ou une fonction acide, de préférence le nombre de moles de double liaison C=C dont au moins l'un des substituants est un groupe électroattracteur ou une fonction acide, et le nombre de moles de liaisons N-H portées par l'organopolysiloxane **O**. Le rapport r correspond à la relation suivante :

$$r = \frac{n(C = C, C \equiv C)}{n(N - H)}$$

On peut également définir le rapport J représentant le rapport entre le nombre de mole de fonctions acide du composé **F** et le nombre de mole de fonctions amine de l'organopolysiloxane **O**. Le rapport **J** correspond à la relation suivante :

$$J = \frac{\text{nombre de mole du composé } \mathbf{F} \times \text{nombre de fonctions acide du composé } \mathbf{F}}{\text{nombre de mole du composé } \mathbf{O} \times \text{nombre de fonctions amine du composé } \mathbf{O}}$$

Par fonction amine, on entend désigner les amines primaires ou secondaires. Il doit donc être compris qu'une

mole de fonction amine primaire contient deux moles de liaisons NH et qu'une mole de fonction amine secondaire contient une mole de liaisons NH.
De préférence, le rapport J est compris entre 0,5 et 3, de préférence entre 0,5 et 1,5, et encore plus préférentiellement entre 0,5 et 1,1
De préférence, le rapport r est compris entre 0,05 et 2, de préférence entre 0,2 et 1,5 et encore plus préférentiellement entre 0,25 et 0,75.

De préférence, l'organopolysiloxane **O** présente une viscosité dynamique comprise entre 1 et 100 000 mPa.s, de préférence entre 100 et 50000 mPa.s. Encore plus préférentiellement l'organopolysiloxane **O** présente une viscosité dynamique comprise entre 5000 et 100000 mPa.s

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

L'additif antimisting **E** peut être un liquide viscoélastique ou un solide viscoélastique. On peut parler de gel lorsque l'additif antimisting **E** est à la transition entre un liquide et un solide viscoélastique. Il est ainsi possible d'obtenir des additifs antimisting **E** présentant des propriétés viscoélastiques modulables.

Comme décrit dans la demande non publiée PCT/EP2015/080843 le procédé de préparation de l'additif antimisting **E** comprend la réaction entre au moins un composé F et au moins un organopolysiloxane **O** tel que définis cidessus. Selon un mode préférentiel la réaction, entre au moins un composé **F** et au moins un organopolysiloxane **O** est mise en oeuvre à pression atmosphérique sous air mais peut également avoir lieu sous atmosphère de gaz inerte comme l'argon ou l'azote.

De préférence, le composé **F** et l'organopolysiloxane **O** sont mis en contact en l'absence de solvant (en masse). Selon un mode de réalisation de l'invention, le composé **F** et l'organopolysiloxane **O** sont mis en contact en présence d'un solvant. Le solvant est notamment choisi parmi :

- les solvants polaires protiques, tels que par exemple l'eau, les alcools, les liquides ioniques ;
- les solvants apolaires tels que par exemple l'heptane, le toluène, le méthylcyclohexane;
- les solvants polaires aprotiques tels que les cétones (par exemple acétone), les ethers, les esters, le tetrahydrofurane (THF), le diméthylsulfoxyde (DMSO), le diméthylformamide (DMF).

Selon un mode particulier de réalisation le composé **F** et l'organopolysiloxane **O** sont mis en contact en présence d'une charge. Dans le cadre de la présente invention, les charges sont de préférence minérales. Elles peuvent être notamment siliceuses. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 μm (micromètres) et une surface spécifique BET supérieure à 30 $m^2/g$, de préférence comprise entre 30 et 350 $m^2/g$. Les charges siliceuses semi-renforçantes telles que des terres de diatomées ou du quartz broyé, peuvent être également employées. De façon pratique mais non limitative, les charges employées peuvent être un mélange de quartz et de silice. Les charges peuvent être traitées par tout produit approprié.
La charge peut être introduite soit directement mélangée à l'organopolysiloxane **O** soit dans le milieu réactionnel après mélange de l'organopolysiloxane **O** et du composé **F**.
Sur le plan pondéral, on préfère mettre en œuvre une quantité de charge comprise entre 0,5% et 30% en poids et de préférence entre 0,5% et 10% en poids par rapport à l'ensemble des constituants **O** et **F**.

Selon un mode particulier de réalisation du procédé selon l'invention, à l'étape **I)** l'organopolysiloxane **A** de la composition silicone liquide **X** précurseur de revêtement(s) silicone est un organopolysiloxane réticulable par voie radicalaire. L'organopolysiloxane **A** est alors un organopolysiloxane **A1** comprenant des fonctions méth(acrylate) et de préférence acrylates. Plus précisément, l'organopolysiloxane **A1** comprend :

a1) au moins un motif de formule (VII.1) suivante :

$$R^6_aZ^3_bSiO_{(4-a-b)/2} \qquad (VII.1)$$

formule dans laquelle :

- les symboles $R^6$, identiques ou différents, représentent chacun un groupe alkyle en $C_1$ à $C_{18}$ linéaire ou ramifié, un groupe aryle ou aralkyle en $C_6$ à $C_{12}$, éventuellement substitué, de préférence par des atomes d'halogène, ou un radical alkoxy $-OR^7$ avec $R^7$ étant un atome d'hydrogène ou un radical hydrocarboné comprenant de 1 à 10 atomes de carbone,

- les symboles $Z^3$ sont des radicaux monovalent de formule $-y-(Y')_n$ dans laquelle :

  - y représente un radical polyvalent alkylène linéaire ou ramifié en $C_1$-$C_{18}$ éventuellement prolongé par des radicaux bivalents oxyalkylène ou polyoxyalkylène en $C_1$ à $C_4$ éventuellement substitué par un radical hydroxy,
  - Y' représente un radical monovalent alcénylcarbonyloxy, et
  - n est égal à 1, 2 ou 3, et

- a est un nombre entier égal à 0, 1 ou 2, b est un nombre entier égal à 1 ou 2 et la somme a+b= 1, 2 ou 3 ; et

a2) éventuellement des motifs de formule (VII.2) suivante:

$$R^8{}_aSiO_{(4-a)/2} \qquad (VII.2)$$

formule dans laquelle :

- les symboles $R^8$, identiques ou différents, représentent chacun un groupe alkyle en $C_1$ à $C_{18}$ linéaire ou ramifié, un groupe aryle ou aralkyle en $C_6$ à $C_{12}$, éventuellement substitué, de préférence par des atomes d'halogène, et

- a est un nombre entier égal à 0, 1, 2 ou 3,

Selon cette variante de l'invention, le photoamorceur **C** mis en œuvre dans la composition **X** avec l'organopolysiloxane **A1** est un photoamorceur radicalaire **C1** qui peut être choisi parmi les cétones aromatiques qui après une exposition sous un rayonnement ultra-violet (UV):

- subissent une scission homolytique en position $\alpha$ de la fonction carbonyle (tels que pour les dérivés d'acylphosphonate, les dérivés d'oxyde d'acylphosphine, les dérivés des éthers de benzoïne et les dérivés de l'acétophénone) avec formation de deux fragments radicalaires, dont l'un est un radical benzoyle (photoamorceurs de type I), ou
- forment des radicaux libres lorsqu'ils sont promus dans leurs états excités par arrachement d'hydrogène d'une molécule donneur d'hydrogène (plus communément désigné par le terme « co-amorceur ») ce qui conduit à la formation d'un radical cétyle inactif et d'un radical amorceur issu du donneur correspondant (photoamorceurs de type II).

De préférence, le photoamorceur radicalaire **C1** est choisi parmi le groupe constitué par les $\alpha$-hydroxycétones, les benzoïnes éther, les cétones $\alpha$-amino aromatiques et les oxydes d'acylphosphine. De préférence, le photoamorceur radicalaire **C1** est un oxyde d'acylphosphine et plus préférentiellement le photoamorceur radicalaire **C1** est l'éthyl(2,4,6-triméthylbenzoyl)phénylphosphinate (n°CAS 84434-11-7).

Selon un autre mode de réalisation de l'invention, à l'étape **I)** l'organopolysiloxane **A** de la composition silicone liquide **X** précurseur de revêtement(s) silicone est un organopolysiloxane réticulable par polyaddition. L'organopolysiloxane **A** est alors un organopolysiloxane **A2** comprenant au moins deux motifs siloxy de formule (VIII.1) avec éventuellement au moins une partie des autres motifs étant des motifs siloxy de formule (VIII.2)

$$W_aZ^4{}_bSiO_{\frac{4-(a+b)}{2}} \qquad (VIII.1)$$

$$Z^4{}_cSiO_{\frac{4-c}{2}} \qquad (VIII.2)$$

formules dans lesquelles :

- W est un groupe alcényle, de préférence vinyle ou allyle,
- les symboles $Z^4$, identiques ou différents, représentent :

  - un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3-trifluoropropyle,
  - un radical cycloalkyle contenant entre 5 et 8 atomes de carbone cycliques, éventuellement substitué,

- un radical aryle contenant entre 6 et 12 atomes de carbone éventuellement substitué, et/ou
- une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles.

- a est 1 ou 2, de préférence égal à 1, b est 0, 1 ou 2 et a + b = 1, 2 ou 3, et
- c = 0, 1, 2 ou 3.

Des exemples d'organopolysiloxanes **A2** réticulables par polyaddition sont les diméthylpolysiloxanes à extrémités diméthylvinylsilyle, les copolymères méthylvinyldiméthylpolysiloxanes à extrémités triméthylsityle, les copolymères méthylvinyldiméthylpolysiloxanes à extrémités diméthylvinylsilyle.
Selon cette variante, le composé organosilicique réticulant **B** est un composé **B2** comprenant au moins trois motifs siloxy de formule (IX.1) avec éventuellement au moins une partie des autres motifs étant des motifs siloxy de formule (IX.2) :

$$HL_cSiO_{(3-c)/2} \quad (IX.1)$$

$$L_gSiO_{(4-g)/2} \quad (IX.2)$$

dans lesquelles :

- H est un atome d'hydrogène,
- les symboles L, identiques ou différents, représentent :
  - un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3-trifluoropropyle,
  - un radical cycloalkyle contenant entre 5 et 8 atomes de carbone cycliques, éventuellement substitué,
  - un radical aryle contenant entre 6 et 12 atomes de carbone éventuellement substitué, et/ou
  - une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles,

- c = 0, 1 ou 2, et
- g= 0, 1, 2 ou 3.

Des exemples de composé organosilicique réticulant B2 sont, par exemple :

- les polymères diméthylpolysiloxane à extrémités hydrogénodiméthylsilyle,
- les polymères poly(diméthylsiloxy) (méthylhydrogénosiloxy) $\alpha,\omega$-diméthylhydrogénosifoxy,
- $MDD^H$ ; les copolymères à motifs (diméthylsiloxy)(hydrogénométhylsiloxy) à extrémités triméthylsilyle,
- $M^HDD^H$ : les copolymères à motifs (diméthylsiloxy)(hydrogénométhylsiloxy) à extrémités hydrogénodiméthylsilyle,
- $MD^H$ : les hydrogénométhylpolysiloxanes à extrémités triméthylsilyle,

Toujours selon cette variante, le catalyseur **C** est un catalyseur de polyaddition **C2.** Le catalyseur de polyaddition **C2** peut être composé d'au moins un métal appartenant au groupe du platine. Ce catalyseur peut notamment être choisi parmi les composés du platine et du rhodium mais aussi parmi des composés de silicium comme ceux décrits dans les demandes de brevet WO2015004396 et WO2015004397, des composés de germanium comme ceux décrits dans les demandes de brevet WO2016075414 ou des complexes de nickel, cobalt ou fer comme ceux décrits dans les demandes de brevet WO2016071651, WO2016071652 et WO2016071654. Le catalyseur généralement préféré est le platine. Dans ce cas, la quantité pondérale du catalyseur de polyaddition C2, calculée en poids de platine-métal, est généralement comprise entre 2 et 400 ppm.

Selon un autre mode de réalisation de l'invention, à l'étape **I)** l'organopolysiloxane **A** de la composition silicone liquide **X** précurseur de revêtement(s) silicone est un organopolysiloxane réticulable par polycondensation. L'organopolysiloxane **A** est alors un organopolysiloxane **A3** linéaire ou ramifié porteur de groupements hydroxyles ou de groupements hydrolysables, par exemple alcoxy, qui réticulent à température ambiante par des réactions de polycondensation sous l'action de l'humidité, en présence généralement d'un catalyseur **C3**. Le catalyseur **C3** est un catalyseur des réactions de polycondensation. Les catalyseurs de polycondensation sont largement connus de l'homme du métier.

Sans vouloir se limiter, le catalyseur **C3** pourra entre autres être choisi parmi les composés à base d'étain largement connus de l'homme du métier ou parmi les catalyseurs organiques comme les guanidines décrites dans les demandes de brevet EP2268743 et EP2367867 ou parmi les complexes métalliques par exemple à base de Zn, Mo, Mg, etc. décrits dans les demandes de brevet EP2222626, EP2222756, EP2222773, EP2935489, EP2935490 et WO2015/082837. Toujours selon cette variante, le composé organosilicique réticulant **B** est un composé **B3** qui est un composé portant au moins 3 groupements hydrolysables, de préférence des groupements alcoxy, comme par exemple un silicate, un alkyltrialcoxysilane ou un aminoalkyle trialcoxysilane.

Selon un autre mode de réalisation de l'invention, à l'étape **I)** l'organopolysiloxane **A** de la composition silicone liquide **X** précurseur de revêtement(s) silicone est un organopolysiloxane réticulable par déshydrogénocondensation, L'organopolysiloxane **A** est alors un organopolysiloxane **A4** linéaire, ramifié ou réticulé porteur de groupements hydroxyles. Selon cette variante, le composé organosilicique réticulant **B** est un composé **B4** qui est un organopolysiloxane linéaire, ramifié ou réticulé porteurs de groupements hydrogénosilyles ou SiH. La réaction de déshydrogénocondensation entre l'organopolysiloxane **A4** et le réticulant **B4** a lieu en présence d'un catalyseur **C4.** Sans vouloir se limiter, le catalyseur **C4** peut être choisi parmi les composés métalliques par exemple à base de platine ou iridium ou organiques par exemple de type guanidine telles que décrites dans les demandes de brevet EP2443207 et EP2443208.

Selon un autre mode de réalisation de l'invention, à l'étape **I)** l'organopolysiloxane **A** de la composition silicone liquide **X** précurseur de revêtement(s) silicone est un organopolysiloxane réticulable par voie cationique. L'organopolysiloxane **A** est alors un organopolysiloxane **A5** comprenant au moins une fonction réactive G choisie parmi le groupe constitué par les fonctions : époxy, alcényléther, oxétane et dioxolane. Ces organopolysiloxanes **A5** réticulent en présence d'une quantité efficace d'un photoamorceur **C** qui est un photoamorceur cationique **C5** du type des sels d'onium par l'intermédiaire d'une activation par rayonnement actinique (UV) ou par faisceaux d'électrons. De préférence, le photoamorceur **C5** est un borate d'iodonium, par exemple tel que décrit dans les documents EP-562897 et EP-2904021. Un exemple spécifique est le borate d'iodonium suivant :

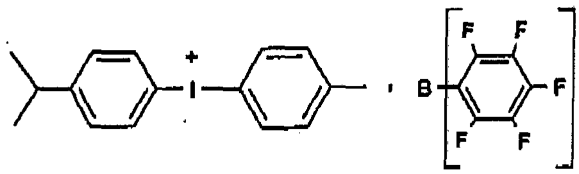

Les organopolysiloxanes **A5** qui peuvent être des organopolysiloxanes époxy ou vinyloxyfonctionnels sont décrits notamment dans les brevets DE-4 009 889, EP-0 396 130, EP- 0 355 381, EP-0 105 341, FR-2 110 115, FR-2 526 800. Les organopolysiloxanes époxy fonctionnels peuvent être préparés par réactions d'hydrosilylation entre des huiles à motifs =SiH et des composés époxy-fonctionnels tels que le 1,2-époxy-4-vinyl-4-cyclohane (VCMX) ou allylglycidyléther. Les organopolysiloxanes vinyloxyfonctionnels peuvent être préparés par réaction d'hydrosilylation entre des huiles à motifs SiH et des composés vinyloxyfonctionnels tels que l'allylvinyléther ou l'allyl- vinyloxyéthoxybenzène.

Quand il est présent, l'inhibiteur de réticulation **D** est en général utilisé pour conférer à la composition prête à l'emploi, une certaine durée de vie en pot (« pot-life »). Ces inhibiteurs de réticulation sont notamment présents lorsque à l'étape **I)** l'organopolysiloxane **A** de la composition silicone liquide **X** précurseur de revêtement(s) silicone est un organopolysiloxane réticulable par polyaddition ou déshydrogénation et que le catalyseur **C** mis en œuvre est à base de platine. L'inhibiteur de réticulation **D** est de préférence choisi parmi les alcools acétyléniques (éthynylcyclohexanol : ECH), les diallylmaléates, les triallylisocyanurates, les dialkylmaléates (diéthylmaléates ou dialkylalcinyledicarboxylates) (diéthyleacéthylène dicarboxylate) ou bien encore parmi les organopolysiloxanes, avantageusement cycliques et substitués par au moins un alcényle, le tétraméthylvinylcyclotétrasiloxane étant particulièrement préféré, ou les maléates alkylés. Les alcools acétyléniques sont des retardateurs utiles selon l'invention. On peut citer à titre d'exemples :

- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Dans la composition silicone liquide **X** précurseur de revêtement(s) silicone, il peut-être avantageux de mettre en œuvre au moins un système modulateur d'adhérence **K**, pour permettre le contrôle des propriétés d'anti-adhérence du revêtement silicone réticulé. A titre d'illustration, le système modulateur d'adhérence **K** peut être :

- dans le cas d'une formulation réticulant par polyaddition : une résine polyorganosiloxane de formule $MD^{VI}Q$ ; $MM^{VI}Q$ ; $MM^{VI}D^{VI}Q$ ; $MM^{VI}DD^{VI}Q$ ; $MD^{H}Q$ ou $MM^{H}Q$ (avec Vi= groupement vinyle)
- dans le cas d'une formulation réticulant par polycondensation ou déshydrogénocondensation : une résine polyorganosiloxane de formule $M^{OH}Q$, et
- dans le cas d'une formulation réticulant sous rayonnement : une résine polyorganosiloxane de formule $MD^{H}Q$ ou $MM^{H}Q$.

Il est rappelé que :

- le symbole « D » désigne un motif siloxy de formule $(Ch_3)_2SiO_{2/2}$
- le symbole « $D^{VI}$ » désigne un motif siloxy de formule $(CH_3)$(vinyle)$SiO_{2/2}$
- le symbole « $D^{H}$ » désigne un motif siloxy de formule $(CH_3)HSiO_{2/2}$
- le symbole « M » désigne un motif siloxy de formule $(CH_3)_3SiO_{1/2}$
- le symbole « $M^{VI}$ » désigne un motif siloxy de formule $(CH_3)_2$(vinyle)$SiO_{1/2}$
- le symbole « $M^{H}$ » désigne un motif siloxy de formule $(CH_3)_2HSiO_{1/2}$
- le symbole « $M^{OH}$ » désigne un motif siloxy de formule $(CH_3)_2(OH)SiO_{1/2}$
- et le symbole « Q » désigne un motif siloxy de formule $SiO_{4/2}$.

Selon une variante préférée du procédé selon l'invention, à l'étape **I)** la composition silicone liquide **X** précurseur de revêtement(s) silicone à laquelle on ajoute l'additif antibrouillard **E** comprend :

- au moins un organopolysiloxane **A1** réticulable par voie radicalaire,
- au moins un photoamorceur radicalaire **C1**; et
- éventuellement au moins un système modulateur d'adhérence **K**.

L'organopolysiloxane **A1** et le photoamorceur **C1** sont tels que définis ci-dessus.

Selon une variante préférée du procédé selon l'invention, à l'étape **I)** la composition silicone liquide X précurseur de revêtement(s) silicone à laquelle on ajoute l'additif antibrouillard **E** comprend :

- au moins un organopolysiloxane **A2** réticulable par polyaddition,
- au moins un composé organosilicique réticulant **B2**,
- au moins un catalyseur **C2,**
- éventuellement, au moins un système modulateur d'adhérence **K**, et
- éventuellement au moins un inhibiteur de réticulation **D**.

L'organopolysiloxane **A2,** le réticulant **B2,** le catalyseur **C2,** le système modulateur d'adhérence **K** et l'inhibiteur de réticulation **D** sont tels que définis ci-dessus.

Selon une autre variante du procédé selon l'invention, à l'étape **I**) la composition silicone liquide **X** précurseur de revêtement(s) silicone à laquelle on ajoute l'additif antibrouillard **E** comprend :

- au moins un organopolysiloxane **A3** réticulable par polycondensation
- au moins un additif antibrouillard E tel que décrit ci-dessus,
- au moins un composé organosilicique réticulant **B3**,
- au moins un catalyseur **C3,** et
- éventuellement, au moins un système modulateur d'adhérence **K**.

L'organopolysiloxane **A3,** le réticulant **B3**, le catalyseur **C3** et le système modulateur d'adhérence **K** sont tels que définis ci-dessus.

Selon une autre variante du procédé selon l'invention, à l'étape **I)** la composition silicone liquide **X** précurseur de revêtement(s) silicone à laquelle on ajoute l'additif antibrouillard **E** comprend :

- au moins un organopolysiloxane **A4** réticulable par déshydrogénocondensation,
- au moins un composé organosilicique réticulant **B4**,
- au moins un catalyseur **C4**, et
- éventuellement au moins un système modulateur d'adhérence **K,** et
- éventuellement au moins un inhibiteur de réticulation **D**.

L'organopolysiloxane **A4**, le réticulant **B4**, le catalyseur **C4**, le système modulateur d'adhérence **K** et l'inhibiteur de

réticulation **D** sont tels que définis ci-dessus.

Selon une autre variante du procédé selon l'invention, à l'étape **I)** la composition silicone liquide **X** précurseur de revêtement(s) silicone à laquelle on ajoute l'additif antibrouillard **E** comprend :

- au moins un organopolysiloxane **A5** réticulable par voie cationique,
- au moins un photoamorceur **C5** et
- éventuellement au moins un système modulateur d'adhérence **K**.

L'organopolysiloxane **A5**, le photoamorceur **C5** et le système modulateur d'adhérence **K** sont tels que définis ci-dessus.

Outre ces constituants, la composition silicone liquide **X** précurseur de revêtement(s) silicone peut également contenir au moins un additif courant dans les compositions silicone réticulant par polyaddition, par polycondensation, par déshydrogénocondensation, par voie cationique ou par voie radicalaire. On peut citer par exemple, les pigments et les charges **P**. Les charges **P** sont de préférence des charges minérales. Ces charges peuvent se présenter sous la forme de produits très finement divisés ; parmi ces charges figurent les silices de combustion et les silices de précipitation : leur surface spécifique est par exemple égale ou supérieure à 40 $m^2/g$, et se situe le plus souvent dans l'intervalle 40-300 $m^2/g$. Ces charges **P** peuvent également se présenter sous la forme de produits plus grossièrement divisés, de diamètre particulaire moyen par exemple supérieur à 1 $\mu m$. Comme exemples de telles charges, on peut citer le quartz broyé, les silices de diatomées, les oxydes de fer, de zinc, de magnésium, les différentes formes d'alumine (hydratée ou non) ; leur surface spécifique est par exemple égale ou inférieure à 30 $m^2/g$. Les charges **P** peuvent avoir été modifiées en surface, par traitement avec les divers composés organosiliciques habituellement employés pour cet usage. Ainsi ces composés organosiliciques peuvent être des organochlorosilanes, des diorganocyclopolysiloxanes, des hexaorganodisiioxanes, des hexaorganodisilazanes ou des diorganocyclopolysilazanes. Les charges traitées renferment, dans la plupart des cas, de 2 à 20 % de leur poids de composés organosiliciques.

Un autre objet de l'invention concerne une composition silicone liquide **X** précurseur de revêtement(s) silicone comprenant :

- au moins un organopolysiloxane **A1** réticulable par voie radicalaire,
- au moins un additif antibrouillard **E** tel que décrit ci-dessus,
- au moins un photoamorceur radicalaire **C1**; et
- éventuellement au moins un système modulateur d'adhérence **K**.

L'organopolysiloxane **A1**, l'additif antibrouillard **E**, le photoamorceur **C1** et le système modulateur d'adhérence **K** sont tels que définis ci-dessus.

Selon une autre variante de l'invention la composition silicone liquide **X** précurseur de revêtement(s) silicone comprend :

- au moins un organopolysiloxane **A2** réticulable par polyaddition,
- au moins un additif antibrouillard **E** tel que décrit ci-dessus,
- au moins un composé organosilicique réticulant **B2**,
- au moins un catalyseur **C2**,
- éventuellement, au moins un système modulateur d'adhérence **K**, et
- éventuellement au moins un inhibiteur de réticulation **D.**

L'organopolysiloxane **A2**, l'additif antibrouillard **E**, le réticulant **B2**, le catalyseur **C2**, le système modulateur d'adhérence **K** et l'inhibiteur de réticulation **D** sont tels que définis ci-dessus.

Selon un autre mode de réalisation préféré, la composition silicone liquide **X** précurseur de revêtement(s) silicone comprend :

- au moins un organopolysiloxane **A3** par polycondensation
- au moins un additif antibrouillard **E** tel que décrit ci-dessus,
- au moins un composé organosilicique réticulant **B3**,
- au moins un catalyseur **C3**, et
- éventuellement, au moins un système modulateur d'adhérence **K**.

L'organopolysiloxane **A3**, l'additif antibrouillard **E**, le réticulant **B3**, le catalyseur **C3** et le système modulateur d'adhérence **K** sont tels que définis ci-dessus.

Selon un autre mode de réalisation préféré, la composition silicone liquide **X** précurseur de revêtement(s) silicone comprend :

- au moins un organopolysiloxane **A4** réticulable par déshydrogénocondensation,
- au moins un additif antibrouillard **E** tel que décrit ci-dessus,
- au moins un composé organosilicique réticulant **B4**,
- au moins un catalyseur **C4** dont la nature, et
- éventuellement au moins un système modulateur d'adhérence **K**, et
- éventuellement au moins un inhibiteur de réticulation **D.**

L'organopolysiloxane **A4**, l'additif antibrouillard **E**, le réticulant **B4**, le catalyseur **C4**, le système modulateur d'adhérence **K** et l'inhibiteur de réticulation **D** sont tels que définis ci-dessus,

Selon un autre mode de réalisation préféré, la composition silicone liquide **X** précurseur de revêtement(s) silicone comprend :

- au moins un organopolysiloxane **A5** réticulable par voie cationique,
- au moins un additif antibrouillard **E** tel que décrit ci-dessus,
- au moins un photoamorceur **C5** et
- éventuellement au moins un système modulateur d'adhérence **K**.

L'organopolysiloxane **A5**, l'additif antibrouillard **E**, le photoamorceur **C5** et le système modulateur d'adhérence **K** sont tels que définis ci-dessus.

Le dernier objet de l'invention concerne l'utilisation de l'additif antibrouillard **E** tel que défini ci-dessus pour réduire l'apparition de brouillard lors de l'enduction de supports flexibles avec une composition silicone liquide **X** précurseur de revêtement(s) silicone.

Il apparaît donc que l'invention propose un moyen original, simple, économique et fiable de lutte contre la production de brouillard lors de l'enduction de supports flexibles (par exemple en papier, en polymère synthétique (polyoléfine, polyester...), ou bien encore en textile) dans des dispositifs d'enduction à cylindre fonctionnant à grande vitesse. La conséquence industrielle pratique est que les vitesses de défilement peuvent être augmentées sans qu'apparaisse ce phénomène de brouillard nuisible à la qualité de l'enduction. Le moyen de lutte proposé par l'invention a également pour avantage non négligeable de ne pas nuire aux qualités d'aspect, à la couverture, aux propriétés d'anti-adhérence, ainsi qu'aux propriétés mécaniques (rub-off) du revêtement réticulé silicone que l'on cherche à obtenir sur au moins une des faces du support flexible.

Par ailleurs, la réduction du brouillard améliore de façon significative les conditions d'hygiène et de sécurité pour le personnel en poste auprès de dispositifs industriels d'enduction silicone sur cylindres fonctionnant à grande vitesse.

Les exemples, qui suivent ont pour vocation d'illustrer des modes de réalisation particuliers de l'invention sans pour autant limiter la portée de l'invention à ces simples modes de réalisation.

## EXEMPLES

I) Préparation des additifs antibrouillard **E** :

Dans les exemples ci-dessous, donnés à titre illustratif, il est fait référence aux définitions suivantes :

- Mn représente la masse molaire moyenne en nombre.

Les organopolysiloxanes mis en oeuvre dans les exemples répondent à la formule suivante :

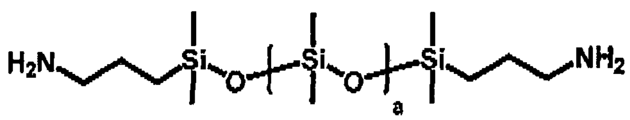

(III)

- Organopolysiloxane (3) : composé de formule (III), Mn≈3000g/mol, quantité de liaison N-H par gramme =$1,33.10^{-3}$ mol/g ;

- Organopolysiloxane (4) : composé de formule (III), Mn≈50000g/mol, quantité de liaison N-H par gramme = $8,0.10^{-5}$ mol/g ;

- Organopolysiloxane (5) : composé de formule (III), Mn≈30000g/mol ; quantité de liaison N-H par gramme = $1,33.10^{-4}$ mol/g,

**Exemple 1 - Préparation d'un additif antibrouillard E1 selon l'invention:**

Dans un ballon monocol de 25mL, on mélange 10,0 g de PDMS (5) et 0,039 g d'acide acrylique ce qui conduit à un rapport molaire r=0,63 et un rapport molaire J=1,26. Le mélange réactionnel est maintenu sous agitation magnétique pendant 7 jours à une température de 50°C. Aucun traitement post-réactionnel n'a été appliqué. Une analyse RMN $^1H$ du produit obtenu dans le $CDCl_3$ à 27°C (128 scans) a permis de montrer la disparition des fonctions acrylique.

**Exemple 2 - Préparation d'un additif antibrouillard E2 selon l'invention:**

Dans un ballon monocol de 25mL, on mélange 13,48 g de l'organopolysiloxane (4) et 0,022 g d'acide acrylique ce qui conduit à un rapport molaire r=0,52 et un rapport molaire J=1,03. Le mélange réactionnel est maintenu sous agitation magnétique pendant 8 jours à une température de 50°C. Aucun traitement post-réactionnel n'a été appliqué. Une analyse RMN $^1H$ du produit obtenu dans le $CDCl_3$ à 27°C (128 scans) a permis de montrer la disparition des fonctions acrylique.

**Exemple 3 - Préparation d'un additif antibrouillard E3 selon l'invention:**

Dans un ballon monocol de 25mL, on mélange 10,01 g de l'organopolysiloxane (3) et 0,461 g d'acide acrylique ce qui conduit à un rapport molaire r=0,5 et un rapport molaire J=0,99. Le mélange réactionnel est maintenu sous agitation magnétique pendant 7 jours à une température de 50°C. Aucun traitement post-réactionnel n'a été appliqué. Une analyse RMN $^1H$ du produit obtenu dans le $CDCl_3$ à 27°C (128 scans) a permis de montrer la disparition des fonctions acrylique.

**Exemple 4** - **Préparation d'un additif antibrouillard E4 selon l'invention:**

Dans un ballon bicol sont mélangés de l'hexylamine et de l'acide acrylique dans des proportions telles que le ratio acide acrylique /amine primaire est égal à 1. Le mélange est mainteu sous agitation pendant 24 heures à une température de 50°C.

Les produits obtenus E1, E2 et E3 présentent tous une viscosité au moins 10 fois plus importante que les organopolysiloxanes respectifs de départ. Les produits obtenus peuvent être qualifiés de liquides viscoélastiques.
Dans les produits E2 et E3 toutes les fonctions acides et amines sont sous forme ionique (carboxylate d'ammonium) car le ratio J est égal à 1. Dans le cas du composé E2, le ratio J= 1,26 et par conséquent 25% des fonctions acides seront sous forme COOH et non sous forme ionique.

<u>II) Test comme additif anti-misting</u>

Les additifs antibrouillard **E1** à **E4** préparés dans la partie I) ont été testés pour l'application anti-misting.

**Description du test**

Pour analyser et quantifier le brouillard produit dans un dispositif d'enduction à cylindres fonctionnant à grande vitesse, on a mis en oeuvre à l'échelle du laboratoire un « pilote misting » avec un néphélomètre (Portable Dust Monitor Series 1.100 de GRIMM) qui permet de mesurer les particules dont la taille est supérieure à 0,5μm, soit l'intégralité des particules émises dans l'atmosphère.

Le dispositif d'enduction (fourni par la société Ermap, France) comprend 2 rouleaux et permet de faire défiler une bande de papier à une vitesse linéique de 50 à 920 m/min. Les deux cylindres presseur/enducteur présentent un diamètre de 10 cm. Le cylindre presseur est recouvert de caoutchouc et le cylindre enducteur de chrome. Le cylindre enducteur a été taillé en haltère de sorte que la vitesse des deux cylindres soit synchrone. Le cylindre presseur entrainable par un moteur, est en contact sous pression constante avec le cylindre enducteur. Le liquide silicone d'enduction est versé directement dans l'entrefer entre les deux rouleaux. La quantité de fluide utilisée est 0,25 ml.

Le néphélomètre mesure la concentration de particules dans le brouillard ou aérosol exprimée en $\mu g/m^3$.

Les performances « anti misting » (antibrouillard) des différents additifs ont été testées dans une composition silicone réticulable par voie radicalaire composée de 95 parties de composé A1 et 5 parties de composé A2, tous les deux de formule suivante :

;

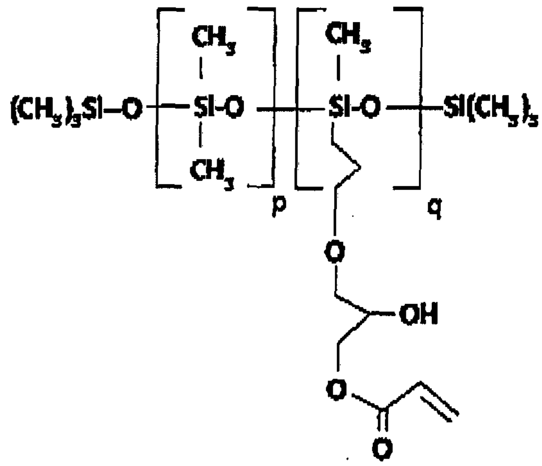

avec pour A1 (p=85 et q=7,5) et pour A2 (p=220 et q=3,8) et d'une partie d'éthyl(2,4,6-triméthylbenzoyl)phénylphosphinate (n°CAS 84434-11-7) comme photoamorçeur.

A la composition décrite ci-dessus sont rajoutés zéro, une ou trois parties en poids des antibrouillard **E1** à **E4** préparés dans la partie I). Le mélange est agité pour l'homogénéiser.

Les résultats de mesure de la densité de brouillard sont exprimés en μg/m3 et présentés dans le Tableau 1 suivant :

Tableau 1 : Mesure densité de brouillard en μg/m3

| **Vitesse m/min** | Sans additif | **E1** 1 partie | **E2** 1 partie | **E3** 1 partie | **E1** 3 parties | **E2** 3 parties | **E3** 3 parties | **E4** 3 parties |
|---|---|---|---|---|---|---|---|---|
| **60** | 570 | 77 | 24 | n.d.* | 26 | 77 | 42 | 23 |
| **200** | 9560 | 2062 | 2163 | 5523 | 146 | 378 | 176 | 54 |
| **400** | 37696 | 3494 | 3867 | 25751 | 247 | 360 | 240 | 105 |
| **600** | 55074 | 3136 | 7828 | 23088 | 570 | 787 | 520 | 122 |
| **800** | n.d.* | n.d.* | n.d.* | n.d.* | 1335 | 2316 | 1043 | 155 |
| **920** | n.d.* | n.d.* | n.d.* | n.d.* | 2407 | 3868 | 1400 | 135 |
| *n.d. non mesuré. | | | | | | | | |

Les produits E1, E2, E3 ou E4 ont un comportement antibrouillard très favorable dans les compositions silicones. Avec une partie en poids d'additif dans la composition, le brouillard est fortement diminué. Avec 3 parties en poids les résultats sont excellents.

Les produits **E1** et **E2** présentent l'avantage de s'incorporer plus facilement que le composé E3 par simple agitation dans la formulation testée.

II) Préparation d'un revêtement silicone anti-adhérent sur un support polymère

Les compositions silicone comprenant trois parties en poids d'additif E1 ou E2 sont enduites à l'aide d'un pilote d'enduction Rotomec sur un support polyester. La vitesse machine est de 50 m/min avec une puissance de lampe à mercure fixée à 100W/cm pour effectuer la réticulation sous UV. Ce dépôt est compris entre 0,9 et 1,1 g/m2. En sortie machine, les tests réalisés sont le « smear », le « rub-off », le « démouillage » et la mesure d'extractibles silicones,

**Tests effectués sur les supports enduits de revêtements silicone anti-adhérent:**

**Smear** : Contrôle qualitatif de la polymérisation de surface par la méthode de la trace au doigt qui consiste à :

- Disposer de l'échantillon de support enduit de silicone à contrôler sur une surface plane et rigide ;
- Faire une trace avec le bout du doigt en appuyant modérément mais nettement ; et

- Examiner à l'oeil la trace ainsi faite, de préférence en lumière rasante. On peut voir ainsi la présence d'une trace même très légère par la différence de brillance de la surface.

L'appréciation est qualitative. On quantifie le « Smear » avec les notations suivantes :

A : très bon, pas de trace au doigt
B : un peu moins bon, trace à peine visible
C : trace nette
D : trace très nette et aspect huileux de la surface, produit à peine polymérisé.

soit un note de A à D, du meilleur résultat au plus mauvais.

**Rub-off** : Contrôle de l'aptitude du silicone à adhérer sur le support flexible par gommage en aller-retour au doigt qui consiste à :

- Disposer l'échantillon de support enduit de silicone à contrôler sur une surface plane et rigide, la silicone étant sur la face supérieure
- Faire 10 Aller et Retour avec le bout du doigt (sur une longueur de 10 cm environ) en appuyant modérément mais nettement.
- Examiner à l'œil l'apparition du gommage. Le gommage correspond à l'apparition d'une fine poudre blanche ou des petites boulettes qui roulent sous le doigt.

L'appréciation est qualitative. On quantifie le gommage avec les notations suivantes :

- 10 : très bon, pas d'apparition de gommage au bout de 10 A-R
- 1 : très mauvais, gommage dès le premier aller

La note correspond au nombre d'aller-retour (de 1 à 10) à partir duquel un gommage apparaît. Soit une note de 1 à 10, du plus faible au meilleur résultat.

**Démouillage** : Appréciation du degré de polymérisation de la couche silicone par évaluation du transfert de silicone sur un adhésif mis en contact avec l'enduction à l'aide d'une encre de tension de surface normée. La méthode est la suivante :

- Sélectionner un échantillon d'environ 20 x 5 cm du papier enduit silicone à caractériser, pris dans le sens du déroulement (sens machine).
- Découper une longueur de ≈ 15 cm de ruban adhésif, puis le déposer côté adhésif sur le papier à contrôler, sans plis, en exerçant 10 fois une pression par glissement du doigt sur la longueur du ruban adhésif. (Ruban adhésif « Scotch » de 3 M, référence 610, largeur: 25 mm).
- Enlever le ruban adhésif et le déposer à plat, partie adhésivée vers le haut.
- Déposer sur la partie adhésivée du ruban, avec un coton tige (à usage unique), une trace d'encre sur une longueur d'environ 10 cm (encres de marque SHERMAN ou FERARINI et BENELI de tension de surface ≈ 30 dynes/cm et de viscosité 2 à 4 mPa/s). Déclencher immédiatement le chronomètre.
- On considère que l'on entre dans la phase du phénomène de démouillage lorsque le trait d'encre change d'aspect, arrêter alors le chronomètre.
- La dépose de l'encre sur la partie adhésivée du ruban doit se faire dans les 2 minutes suivant l'enduction silicone.
- Si le résultat obtenu est < 10 secondes, on estime qu'il y a migration de silicone sur l'adhésif, et que la polymérisation n'est pas complète.
- On donnera une note de 0 à 10 correspondant au temps écoulé en secondes avant l'observation du phénomène de démouillage.
- Si le résultat obtenu est 10 secondes, on estime que la polymérisation est complète. Dans ce cas, on donnera une note de 10 signifiant que le résultat est très bon.
- Noter la note obtenue et l'encre utilisée (nom, marque, tension de surface, viscosité).

**Extractibles** : Mesure de la quantité de silicone qui n'est pas greffée au réseau formé lors de la polymérisation. Ces silicones sont extraits du film par immersion d'échantillon dès la sortie machine dans la MIBK durant 24h minimum. Ceci est mesuré par spectroscopie à absorption de flamme.

Les résultats des différents tests métiers sont présentés dans le tableau suivant,

Tableau 2 : Résultats des tests métier sur les revêtements

| Formulation | Sans additif | 3 parties additif E1 | 3 parties additif E2 |
|---|---|---|---|
| XRF coatweight ($g/m^2$) | 0,95 | 1,02 | 1,02 |
| Smear | A | A | B |
| Rub-off | 10 | 10 | 10 |
| Démouillage | 10 | 10 | 10 |
| Extractables In-Line (100 $cm^2$)% | 1,2 | 1,4 | 1,3 |

Les tests métiers des deux formulations comprenant 3 parties d'additifs anti-misting E1 ou E2 sont satisfaisants. Il n'y a pas de dégradation des propriétés du revêtement obtenu.

**Release** : Des mesures de forces de pelage ont été effectuées avec les adhésifs normés TESA 4651. Les éprouvettes de l'article multicouche (adhésif en contact avec surface silicone) ont été conservées 1 jour à 23°C, 1 jour à 70°C et 7 jours à 70°C dans les conditions de pression requises, puis testées à faible vitesse de pelage selon le test FINAT 3 (FTM 3) connu de l'homme de l'art.

La force de décollement s'exprime en cN/inch et se mesure à l'aide d'un dynamomètre, après mise sous pression des échantillons soit à température ambiante (23°C) soit à plus haute température pour des tests de vieillissement accéléré (en général 70°C).

Les résultats sont consignés dans le Tableau 3 ci-dessous

Tableau 3 : Force de décollement en cN/inch

| Formulation | Sans additif | 3 parties additif E1 | 3 parties additif E2 |
|---|---|---|---|
| TESA 7475 | | | |
| 1d @ 23°C | 9 | 11 | 11 |
| 1d @ 70°C | 10 | 14 | 13 |
| 7d @ 70°C | 12 | 17 | 17 |

## Revendications

**1.** Procédé de lutte contre l'apparition de brouillard lors de l'enduction de supports flexibles comprenant les étapes **I)** et **II)** suivantes :

**I)** la préparation d'une composition silicone liquide **X** précurseur de revêtement(s) silicone comprenant :

- au moins un organopolysiloxane **A** réticulable par polyaddition, par déshydrogénocondensation, par polycondensation, par voie cationique ou par voie radicalaire,
- éventuellement au moins un composé organosilicique réticulant **B**,
- éventuellement au moins un catalyseur ou photoamorceur **C** dont la nature est choisie suivant le type de réaction envisagée pour ledit organopolysiloxane **A**,
- éventuellement, au moins un système modulateur d'adhérence **K**, et
- éventuellement au moins un inhibiteur de réticulation **D**; et

**II)** l'enduction de ladite composition silicone liquide **X** sur un support flexible à l'aide d'un dispositif d'enduction à cylindres,

ledit procédé étant **caractérisé en ce qu'**à l'étape **I)** on ajoute à ladite composition silicone liquide **X** un additif antibrouillard **E** susceptible d'être obtenu en faisant réagir à une température comprise entre 10°C et 100°C :

- au moins un composé **F** choisi parmi les composés organiques comprenant au moins une fonction alcène ou alcyne dont au moins l'un des substituants est une fonction acide et les composés organiques comprenant au moins une fonction acide et au moins une fonction alcène ou alcyne dont au moins l'un des substituants est un

groupe électroattracteur; et
- au moins un composé chimique comprenant au moins une fonction amine primaire ou secondaire.

**2.** Procédé de lutte contre l'apparition de brouillard lors de l'enduction de supports flexibles selon la revendication 1 comprenant les étapes **I)** et **II)** suivantes :

**I)** la préparation d'une composition silicone liquide **X** précurseur de revêtement(s) silicone comprenant :

- au moins un organopolysiloxane **A** réticulable par polyaddition, par déshydrogénocondensation, par polycondensation, par voie cationique ou par voie radicalaire,
- éventuellement au moins un composé organosilicique réticulant **B**,
- éventuellement au moins un catalyseur ou photoamorceur **C** dont la nature est choisie suivant le type de réaction envisagée pour ledit organopolysiloxane **A**,
- éventuellement, au moins un système modulateur d'adhérence **K**, et
- éventuellement au moins un inhibiteur de réticulation **D**; et

**II)** l'enduction de ladite composition silicone liquide **X** sur un support flexible à l'aide d'un dispositif d'enduction à cylindres,

ledit procédé étant **caractérisé en ce qu'**à l'étape **I)** on ajoute à ladite composition silicone liquide **X** un additif antibrouillard **E** susceptible d'être obtenu en faisant réagir à une température comprise entre 10°C et 100°C :

- au moins un composé **F** choisi parmi les composés organiques comprenant au moins une fonction alcène ou alcyne dont au moins l'un des substituants est une fonction acide et les composés organiques comprenant au moins une fonction acide et au moins une fonction alcène ou alcyne dont au moins l'un des substituants est un groupe électroattracteur; et
- au moins un organopolysiloxane **O** choisi parmi les organopolysiloxanes comprenant des motifs siloxy (I.1) et (I.2) de formules suivantes:

$$Y_a Z^1_b SiO_{\frac{4-(a+b)}{2}} \quad (I.1) ;$$

$$Z^2_c SiO_{\frac{4-c}{2}} \quad (I.2)$$

dans lesquelles :

- a= 1 ou 2, b= 0, 1 ou 2 et a+b= 1, 2 ou 3
- c = 1, 2 ou 3
- les symboles Y, identiques ou différents, représentent un groupe fonctionnel de formule (I.3) :

$$-E^1\text{-}(NH\text{-}G)_h\text{-}(NH_2)_i \qquad (I.3)$$

dans laquelle :

- h = 0 ou 1;
- i = 0 ou 1 ;
- h+i = 1 ou 2 ;
- $E^1$ représente un radical hydrocarboné divalent aliphatique, cycloaliphatique ou aromatique comprenant de 1 à 30 atomes de carbone ; de préférence aliphatique contenant de 1 à 10 atomes de carbone ;
- lorsqu'il est présent, G représente un radical hydrocarboné aliphatique comprenant de 1 à 10 atomes de carbone, monovalent lorsque i=0 ou divalent lorsque i=1;

- les symboles $Z^1$ et $Z^2$, identiques ou différents, représentent un radical hydrocarboné monovalent ayant de 1 à 30 atomes de carbone et comprenant éventuellement une ou plusieurs insaturations et/ou un ou plusieurs atomes de fluor, un groupe hydroxyle, ou un radical-$OR^1$ avec $R^1$ qui représente un radical hydrocarboné en $C_1$-$C_{10}$ linéaire, cyclique ou ramifié, et de préférence $Z^1$ et $Z^2$ représentent un groupe hydrocarboné monovalent choisi parmi le groupe constitué par les groupes alkyles ayant de 1 à 8 atomes de carbone, les groupes alcényles ayant de 2 à 6 atomes de carbone et les groupes aryles ayant de 6 à 12 atomes de carbone comprenant éventuellement un ou plusieurs atomes de fluor, un groupe hydroxyle, ou un radical-$OR^1$ avec $R^1$ qui représente un radical hydrocarboné en $C_1$-$C1_0$ linéaire, cyclique ou ramifié, et encore plus préférentiellement choisis parmi le groupe constitué par un groupe méthyle, éthyle, propyle, 3,3,3-trifluoropropyle, vinyle, hydroxyle, éthoxyle, méthoxyle, xylyle, tolyle et phényle ;

ledit organopolysiloxane O comprenant, par molécule, au moins un motif siloxy (I.1) porteur d'au moins un groupe fonctionnel de formule (I.3).

3. Procédé de lutte contre l'apparition de brouillard lors de l'enduction de supports flexibles selon les revendications 1 ou 2 dans lequel le composé F est choisi parmi les composés organiques comprenant au moins une double liaison carbone-carbone et au moins une fonction acide carboxylique.

4. Procédé de lutte contre l'apparition de brouillard lors de l'enduction de supports flexibles selon les revendications 1 ou 2 dans lequel dans lequel le composé F est choisi parmi les composés de formule (II)

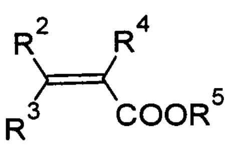
(II)

dans laquelle :

$R^2$, $R^3$ et $R^4$, identiques ou différents, représentent un atome d'hydrogène, un groupe COOH, ou un groupe alkyle en $C_1$ à Ce, de préférence en $C_1$ à $C_3$, de préférence méthyle ;
$R^5$ représente un atome d'hydrogène, un groupe alkyle ou un groupe aryle, dans lequel l'alkyle et l'aryle comprennent au moins un groupe COOH.

5. Procédé de lutte contre l'apparition de brouillard lors de l'enduction de supports flexibles selon les revendication 1 ou 2 dans lequel le composé **F** est choisi parmi le groupe constitué par l'acide acrylique, l'acide méthacrylique, l'acide itaconique, l'acide crotonique, le 2-carboxyéthylacrylate, le 3-carboxypropylacrylate, l'acide maléique, l'acide fumarique, l'acide 2-(acryloyloxy)acétique, l'acide 2-(acryloyloxy)propanoique, l'acide 3-(acrylolyloxy)propanoique, l'acide 2-(acryloyloxy)-2-phenylacétique, l'acide 4-(acryloyloxy)butanoique, l'acide 2-(acryloyloxy)-2-methylpropanoique, l'acide 5-(acryloyloxy)pentanoique, l'acide (E)-but-2-enoic, l'acide (Z)-prop-1-ene-1,2,3-tricarboxylique, l'acide cinnamique, l'acide sorbique, l'acide 2-hexenoique, acide 2-pentenoique, l'acide 2,4-pentadienoique, l'acide ethenesulfonique, l'acide vinylphosphonique, l'acide (1-phenylvinyl)phosphonique, l'acide 3-(vinylsulfonyl)propanoique, l'acide 2-(vinylsulfonyl)acétique, l'acide 2-(vinylsulfonyl)succinique, l'acide acétylène dicarboxylique et l'acide propiolique.

6. Procédé de lutte contre l'apparition de brouillard lors de l'enduction de supports flexibles selon la revendication 2 dans lequel l'organopolysiloxane **O** est choisi parmi les organopolysiloxanes comprenant des motifs siloxy (I.1) et (I.2) de formules suivantes:

$$Y_a Z^1_b SiO_{\frac{4-(a+b)}{2}} \quad (I.1) \quad ;$$

$$Z^2_c SiO_{\frac{4-c}{2}} \quad (I.2)$$

dans lesquelles :

- Y et $Z^1$ et $Z^2$ ont les définitions données à la revendication 1 ;
- a= 1 ou 2, b= 0, 1 ou 2 et a+b= 2 ou 3
- c = 2 ou 3.

**7.** Procédé de lutte contre l'apparition de brouillard lors de l'enduction de supports flexibles selon la revendication 1 ou 2 dans lequel ladite composition silicone liquide **X** précurseur de revêtement(s) silicone à laquelle on ajoute l'additif antibrouillard **E** tel que défini selon la revendication 1 ou 2, comprend :

- au moins un organopolysiloxane **A1** réticulable par voie radicalaire,
- au moins un photoamorceur radicalaire **C1**; et
- éventuellement au moins un système modulateur d'adhérence **K**.

**8.** Composition silicone liquide **X** précurseur de revêtement(s) silicone comprenant :

- au moins un organopolysiloxane **A2** réticulable par polyaddition comprenant au moins deux motifs siloxy de formule (VIII.1) avec éventuellement au moins une partie des autres motifs étant des motifs siloxy de formule (VIII.2)

$$W_aZ^4_bSiO(4-(a+b))/2 \quad (VIII.\ 1)$$

$$Z^4_cSiO(4-c)/2 \quad (VIII.2)$$

formules dans lesquelles :

- W est un groupe alcényle, de préférence vjnyle ou allyle,
- les symboles Z4, identiques ou différents, représentent un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3 trifluoropropyle, un radical cycloalkyle contenant entre 5 et 8 atomes de carbone cycliques, éventuellement substitué, un radical aryle contenant entre 6 et 12 atomes de carbone cycliques, éventuellement substitué, et/ou une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles
- a est 1 ou 2, de préférence égal à 1, b est 0, 1 ou 2 et a + b = 1, 2 ou 3, et
- c = 0, 1, 2 ou 3.

- au moins un additif antibrouillard E tel que décrit selon la revendication 1 ou 2,
- au moins un composé organosilicique réticulant **B2** comprenant au moins trois motifs siloxy de formule (IX. 1) avec éventuellement au moins une partie des autres motifs étant des motifs siloxy de formule (IX.2) :

$$HL_cSiO(3-c)/2 \quad (IX.\ 1)$$

$$L_gSiO(4-g)/2 \quad (IX.\ 2)$$

dans lesquelles :

- H est un atome d'hydrogène,
- les symboles L, identiques ou différents, représentent un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3-trifluoropropyle, un radical cycloalkyle contenant entre 5 et 8 atomes de carbone cycliques, éventuellement substitué, un radical aryle contenant entre 6 et 12 atomes de carbone éventuellement substitué, et/ou une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles,
- c = 0, 1 ou 2 et
- g= 0, 1, 2 ou 3.

- au moins un catalyseur de polyaddition **C2**,
- éventuellement, au moins un système modulateur d'adhérence K, et
- éventuellement au moins un inhibiteur de réticulation D.

**9.** Composition silicone liquide **X** selon la revendication 1 comprenant :

- au moins un organopolysiloxane **A1** réticulable par voie radicalaire,
- au moins un additif antibrouillard **E** tel que décrit selon la revendication 1 ou 2,
- éventuellement au moins un photoamorceur radicalaire **C1** et
- éventuellement, au moins un système modulateur d'adhérence **K**.

**10.** Utilisation de l'additif antibrouillard **E** tel que défini selon la revendications 1 ou 2 pour réduire l'apparition de brouillard lors de l'enduction de supports flexibles avec une composition silicone liquide **X** précurseur de revêtement(s) silicone.

**Patentansprüche**

**1.** Verfahren zur Bekämpfung des Auftretens von Nebel bei der Beschichtung von flexiblen Trägern, das die folgenden Schritte **I)** und **II)** umfasst:

**I)** Herstellung einer flüssigen Silikonzusammensetzung **X**, die eine Silikonüberzugsvorstufe ist, umfassend:

- mindestens ein Organopolysiloxan **A**, das durch Polyaddition, Dehydrokondensation, Polykondensation, kationisch oder radikalisch vernetzbar ist,
- gegebenenfalls mindestens eine vernetzende Organosiliciumverbindung **B**,
- gegebenenfalls mindestens einen Katalysator oder Photoinitiator **C**, dessen Beschaffenheit gemäß dem Typ der für das Organopolysiloxan **A** vorgesehenen Reaktion gewählt wird,
- gegebenenfalls mindestens ein haftungsmodulierendes System **K** und
- gegebenenfalls mindestens einen Vernetzungsinhibitor **D**; und

**II)** Auftragen der flüssigen Silikonzusammensetzung **X** auf einen flexiblen Träger mit Hilfe eines Walzenauftragswerks,
wobei das Verfahren **dadurch gekennzeichnet ist, dass** man in Schritt **I)** der flüssigen Silikonzusammensetzung **X** ein Antinebeladditiv **E** zusetzt, das dadurch erhältlich ist, dass man bei einer Temperatur zwischen 10 °C und 100 °C

- mindestens eine Verbindung **F**, die aus organischen Verbindungen mit mindestens einer Alken- oder Alkinfunktion, wobei mindestens einer der Substituenten eine Säurefunktion ist, und organischen Verbindungen mit mindestens einer Säurefunktion und mindestens einer Alken- oder Alkinfunktion, wobei mindestens einer der Substituenten eine elektronenanziehende Gruppe ist; und
- mindestens eine chemische Verbindung mit mindestens einer primären oder sekundären Aminfunktion umsetzt.

**2.** Verfahren zur Bekämpfung des Auftretens von Nebel bei der Beschichtung von flexiblen Trägern nach Anspruch 1, das die folgenden Schritte **I)** und **II)** umfasst:

**I)** Herstellung einer flüssigen Silikonzusammensetzung **X**, die eine Silikonüberzugsvorstufe ist, umfassend:

- mindestens ein Organopolysiloxan **A**, das durch Polyaddition, Dehydrokondensation, Polykondensation, kationisch oder radikalisch vernetzbar ist,
- gegebenenfalls mindestens eine vernetzende Organosiliciumverbindung **B**,
- gegebenenfalls mindestens einen Katalysator oder Photoinitiator **C**, dessen Beschaffenheit gemäß dem Typ der für das Organopolysiloxan **A** vorgesehenen Reaktion gewählt wird,
- gegebenenfalls mindestens ein haftungsmodulierendes System **K** und
- gegebenenfalls mindestens einen Vernetzungsinhibitor **D**; und

**II)** Auftragen der flüssigen Silikonzusammensetzung **X** auf einen flexiblen Träger mit Hilfe eines Walzenauftragswerks,

wobei das Verfahren **dadurch gekennzeichnet ist, dass** man in Schritt **I)** der flüssigen Silikonzusammensetzung **X** ein Antinebeladditiv **E** zusetzt, das dadurch erhältlich ist, dass man bei einer Temperatur zwischen 10 °C und 100 °C

- mindestens eine Verbindung **F**, die aus organischen Verbindungen mit mindestens einer Alken- oder Alkinfunktion, wobei mindestens einer der Substituenten eine Säurefunktion ist, und organischen Verbindungen mit mindestens einer Säurefunktion und mindestens einer Alken- oder Alkinfunktion, wobei mindestens einer der Substituenten eine elektronenanziehende Gruppe ist; und
- mindestens ein Organopolysiloxan **O**, ausgewählt aus Organopolysiloxanen mit Siloxyeinheiten (I.1) und (I.2) der folgenden Formeln:

$$Y_aZ^1_bSiO_{\frac{4-(a+b)}{2}} \quad (I.1);$$

$$Z^2_cSiO_{\frac{4-c}{2}} \quad (I.2)$$

worin:

- a = 1 oder 2, b = 0, 1 oder 2 und a+b = 1, 2 oder 3;
- c = 1, 2 oder 3;
- die Symbole Y, die gleich oder verschieden sind, für eine funktionelle Gruppe der Formel (I.3):

$$-E^1-(NH-G)_h-(NH_2)_i \quad (I.3)$$

stehen, worin:

- h = 0 oder 1;
- i = 0 oder 1;
- h+i = 1 oder 2;
- $E^1$ für einen aliphatischen, cycloaliphatischen oder aromatischen zweiwertigen Kohlenwasserstoffrest mit 1 bis 30 Kohlenstoffatomen und vorzugsweise einen aliphatischen Rest mit 1 bis 10 Kohlenstoffatomen steht;
- G, falls vorhanden, für einen aliphatischen Kohlenwasserstoffrest mit 1 bis 10 Kohlenstoffatomen steht, der im Fall von i = 0 einwertig ist und im Fall von i = 1 zweiwertig ist;
- die Symbole $Z^1$ und $Z^2$, die gleich oder verschieden sind, für einen einwertigen Kohlenwasserstoffrest mit 1 bis 30 Kohlenstoffatomen und gegebenenfalls einer oder mehreren Ungesättigtheiten und/oder einem oder mehreren Fluoratomen, einer Hydroxylgruppe oder einem Rest $-OR^1$, wobei $R^1$ für einen linearen, cyclischen oder verzweigten $C_1$-$C_{10}$-Kohlenwasserstoffrest steht, stehen und $Z^1$ und $Z^2$ vorzugsweise für eine einwertige Kohlenwasserstoffgruppe stehen, die aus der Gruppe bestehend aus Alkylgruppen mit 1 bis 8 Kohlenstoffatomen, Alkenylgruppen mit 2 bis 6 Kohlenstoffatomen und Arylgruppen mit 6 bis 12 Kohlenstoffatomen, die gegebenenfalls ein oder mehrere Fluoratome, eine Hydroxylgruppe oder einen Rest $-OR^1$, wobei $R^1$ für einen linearen, cyclischen oder verzweigten $C_1$-$C_{10}$-Kohlenwasserstoffrest steht, umfassen, ausgewählt sind und noch weiter bevorzugt aus der Gruppe bestehend aus einer Methyl-, Ethyl-, Propyl-, 3,3,3-Trifluorpropyl-, Vinyl-, Hydroxyl-, Ethoxyl- , Methoxyl-, Xylyl-, Tolyl- und Phenylgruppe ausgewählt sind;

wobei das Organopolysiloxan **O** pro Molekül mindestens eine Siloxyeinheit (I.1), die mindestens eine funktionelle Gruppe der Formel (I.3) trägt, umfasst;
umsetzt.

**3.** Verfahren zur Bekämpfung des Auftretens von Nebel bei der Beschichtung von flexiblen Trägern nach Anspruch 1 oder 2, wobei die Verbindung **F** aus organischen Verbindungen mit mindestens einer Kohlenstoff-Kohlenstoff-Doppelbindung und mindestens einer Carbonsäurefunktion ausgewählt sind.

4. Verfahren zur Bekämpfung des Auftretens von Nebel bei der Beschichtung von flexiblen Trägern nach Anspruch 1 oder 2, wobei wobei die Verbindung **F** aus den Verbindungen der Formel (II)

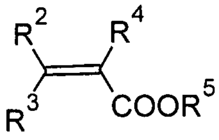
(II)

ausgewählt ist, worin:

$R^2$, $R^3$ und $R^4$, die gleich oder verschieden sind, für ein Wasserstoffatom, eine COOH-Gruppe oder eine $C_1$- bis $C_6$- und vorzugsweise $C_1$- bis $C_3$-Alkylgruppe, vorzugsweise Methyl, stehen;
$R^5$ für ein Wasserstoffatom, eine Alkylgruppe oder eine Arylgruppe steht, wobei das Alkyl und das Aryl mindestens eine COOH-Gruppe umfassen.

5. Verfahren zur Bekämpfung des Auftretens von Nebel bei der Beschichtung von flexiblen Trägern nach Anspruch 1 oder 2, wobei die Verbindung **F** aus der Gruppe bestehend aus Acrylsäure, Methacrylsäure, Itaconsäure, Crotonsäure, 2-Carboxyethylacrylat, 3-Carboxypropylacrylat, Maleinsäure, Fumarsäure, 2-(Acryloyloxy)essigsäure, 2-(Acryloyloxy)propansäure, 3-(Acryloyloxy)propansäure, 2-(Acryloyloxy)-2-phenylessigsäure, 4-(Acryloyloxy)butansäure, 2-(Acryloyloxy)-2-methylpropansäure, 5-(Acryloyloxy)pentansäure, (E)-But-2-ensäure, (Z)-Prop-1-en-1,2,3-tricarbonsäure, Zimtsäure, Sorbinsäure, 2-Hexensäure, 2-Pentensäure, 2,4-Pentadiensäure, Ethensulfonsäure, Vinylphosphonsäure, (1-Phenylvinyl)phosphonsäure, 3-(Vinylsulfonyl)-propansäure, 2-(Vinylsulfonyl)essigsäure, 2-(Vinylsulfonyl)bernsteinsäure, Acetylendicarbonsäure and Propiolsäure ausgewählt ist.

6. Verfahren zur Bekämpfung des Auftretens von Nebel bei der Beschichtung von flexiblen Trägern nach Anspruch 2, wobei das Organosiloxan **O** aus Organopolysiloxanen mit Siloxyeinheiten (I.1) und (I.2) der folgenden Formeln:

$$Y_a Z^1_b SiO_{\frac{4-(a+b)}{2}} \quad (I.1);$$

$$Z^2_c SiO_{\frac{4-c}{2}} \quad (I.2)$$

ausgewählt ist, worin:

- Y und $Z^1$ und $Z^2$ wie in Anspruch 1 definiert sind;
- a = 1 oder 2, b = 0, 1 oder 2 und a+b = 2 oder 3;
- c = 2 oder 3.

7. Verfahren zur Bekämpfung des Auftretens von Nebel bei der Beschichtung von flexiblen Trägern nach Anspruch 1 oder 2, wobei die flüssige Silikonzusammensetzung **X,** die eine Silikonüberzugsvorstufe ist, der man das Antinebeladditiv **E** gemäß Anspruch 1 oder 2 zusetzt, Folgendes umfasst:

- mindestens ein radikalisch vernetzbares Organopolysiloxan **A1**,
- mindestens einen radikalischen Photoinitiator **C1** und
- gegebenenfalls mindestens ein haftungsmodulierendes System **K.**

8. Flüssige Silikonzusammensetzung **X,** die eine Silikonüberzugsvorstufe ist, umfassend:

- mindestens ein durch Polyaddition vernetzbares Organopolysiloxan **A2** mit mindestens zwei Siloxyeinheiten der Formel (VIII.1), wobei es sich gegebenenfalls bei mindestens einem Teil der anderen Einheiten um Siloxyeinheiten der Formel (VIII.2) handelt:

$$W_aZ^4_bSiO_{(4-(a+b))/2} \quad (VIII.1)$$

$$Z^4_cSiO_{(4-c)/2} \quad (VIII.2)$$

wobei in den Formeln:

- W für eine Alkenylgruppe, vorzugsweise Vinyl oder Allyl, steht,
- die Symbole Z4, die gleich oder verschieden sind, für einen linearen oder verzweigten Alkylrest mit 1 bis 20 Kohlenstoffatomen, der gegebenenfalls durch mindestens ein Halogen, vorzugsweise Fluor, substituiert ist, wobei es sich bei den Alkylresten vorzugsweise um Methyl, Ethyl, Propyl, Octyl und 3,3,3-Trifluorpropyl handelt, einen Cycloalkylrest mit zwischen 5 und 8 Ringkohlenstoffatomen, der gegebenenfalls substituiert ist, einen Alkylrest mit zwischen 6 und 12 Ringkohlenstoffatomen, der gegebenenfalls substituiert ist, und/oder eine Aralkylgruppierung mit einem Alkylteil mit zwischen 5 und 14 Kohlenstoffatomen und einem Arylteil mit zwischen 6 und 12 Kohlenstoffatomen, die gegebenenfalls am Arylteil durch Halogene und/oder Alkylgruppen substituiert ist, stehen,
- a für 1 oder 2 steht und vorzugsweise gleich 1 ist, b für 0, 1 oder 2 steht und a + b = 1, 2 oder 3 und
- c = 0, 1, 2 oder 3;
- mindestens ein Antinebeladditv **E** gemäß Anspruch 1 oder 2,
- mindestens eine vernetzende Organosiliciumverbindung **B2** mit mindestens drei Siloxyeinheiten der Formel (IX.1), wobei es sich bei mindestens einem Teil der anderen Einheiten um Siloxyeinheiten der Formel (IX.2) handelt:

$$HL_cSiO_{(3-c)/2} \quad (IX.1)$$

$$L_gSiO_{(4-g)/2} \quad (IX.2)$$

worin:

  - H für ein Wasserstoffatom steht,
  - die Symbole L, die gleich oder verschieden sind, für einen linearen oder verzweigten Alkylrest mit 1 bis 20 Kohlenstoffatomen, der gegebenenfalls durch mindestens ein Halogen, vorzugsweise Fluor, substituiert ist, wobei es sich bei den Alkylresten vorzugsweise um Methyl, Ethyl, Propyl, Octyl und 3,3,3-Trifluorpropyl handelt, einen Cycloalkylrest mit zwischen 5 und 8 Ringkohlenstoffatomen, der gegebenenfalls substituiert ist, einen Arylrest mit zwischen 6 und 12 Kohlenstoffatomen, der gegebenenfalls substituiert ist, und/oder eine Aralkylgruppierung mit einem Alkylteil mit zwischen 5 und 14 Kohlenstoffatomen und einem Arylteil mit zwischen 6 und 12 Kohlenstoffatomen, die gegebenenfalls am Arylteil durch Halogene und/oder Alkylgruppen substituiert ist, stehen,
  - c = 0, 1 oder 2 und
  - g = 0, 1, 2 oder 3,
  - mindestens einen Polyadditionskatalysator **C2**,
  - gegebenenfalls mindestens ein haftungsmodulierendes System **K** und
  - gegebenenfalls mindestens einen Vernetzungsinhibitor **D.**

**9.** Flüssige Silikonzusammensetzung **X** nach Anspruch 1, umfassend:

- mindestens ein radikalisch vernetzbares Organopolysiloxan **A1**,
- mindestens ein Antinebeladditiv **E** gemäß Anspruch 1 oder 2,
- gegebenenfalls mindestens einen radikalischen Photoinitiator **C1** und
- gegebenenfalls mindestens ein haftungsmodulierendes System **K.**

**10.** Verwendung des Antinebeladditivs **E** gemäß Anspruch 1 oder 2 zur Verringerung des Auftretens von Nebel bei der Beschichtung von flexiblen Trägern mit einer flüssigen Silikonzusammensetzung **X,** die eine Silikonüberzugsvorstufe ist.

## Claims

1. Method for the prevention of mist formation during the coating of flexible media, comprising the following steps **I)** and **II)**:

   **I)** preparing a liquid silicone composition **X** that is a precursor of silicone coating(s), comprising:

   - at least one organopolysiloxane **A** crosslinkable by polyaddition, by dehydrocondensation, by polycondensation, cationically or radically,
   - optionally at least one crosslinking organosilicon compound **B**,
   - optionally at least one catalyst or photoinitiator **C**, the nature of which is chosen according to the type of reaction envisaged for said organopolysiloxane **A**,
   - optionally at least one adhesion-modulating system **K**, and
   - optionally at least one crosslinking inhibitor **D**; and

   **II)** coating said liquid silicone composition **X** onto a flexible medium by means of a roll coating device, said method being **characterized in that** in step **I)** there is added to said liquid silicone composition **X** an anti-misting additive **E** obtainable by reacting at a temperature of between 10°C and 100°C:

   - at least one compound **F** chosen from the organic compounds comprising at least one alkene or alkyne function of which at least one of the substituents is an acid function, and the organic compounds comprising at least one acid function and at least one alkene or alkyne function of which at least one of the substituents is an electro-attractive group; and
   - at least one chemical compound comprising at least one primary or secondary amine function.

2. Method for the prevention of mist formation during the coating of flexible media according to Claim 1, comprising the following steps **I)** and **II)**:

   **I)** preparing a liquid silicone composition **X** that is a precursor of silicone coating(s), comprising:

   - at least one organopolysiloxane **A** crosslinkable by polyaddition, by dehydrocondensation, by polycondensation, cationically or radically,
   - optionally at least one crosslinking organosilicon compound **B**,
   - optionally at least one catalyst or photoinitiator **C**, the nature of which is chosen according to the type of reaction envisaged for said organopolysiloxane **A**,
   - optionally at least one adhesion-modulating system **K**, and
   - optionally at least one crosslinking inhibitor **D**; and

   **II)** coating said liquid silicone composition **X** onto a flexible medium by means of a roll coating device, said method being **characterized in that** in step **I)** there is added to said liquid silicone composition **X** an anti-misting additive **E** obtainable by reacting at a temperature of between 10°C and 100°C:

   - at least one compound **F** chosen from the organic compounds comprising at least one alkene or alkyne function of which at least one of the substituents is an acid function, and the organic compounds comprising at least one acid function and at least one alkene or alkyne function of which at least one of the substituents is an electro-attractive group; and
   - at least one organopolysiloxane **O** chosen from the organopolysiloxanes comprising siloxy units (I.1) and (1.2) of the following formulae:

$$Y_aZ^1_bSiO_{\frac{4-(a+b)}{2}} \quad (I.1);$$

$$Z^2_cSiO_{\frac{4-c}{2}} \quad (I.2)$$

wherein:

- a = 1 or 2, b = 0, 1 or 2 and a+b = 1, 2 or 3
- c = 1, 2 or 3
- the symbols Y, which may be identical or different, represent a functional group of formula (1.3):

$$-E^1-(NH-G)_h-(NH_2)_i \qquad (I.3)$$

wherein:

- h = 0 or 1;
- i = 0 or 1;
- h+i = 1 or 2;
- $E^1$ represents a divalent aliphatic, cycloaliphatic or aromatic hydrocarbon radical containing from 1 to 30 carbon atoms; preferably aliphatic containing from 1 to 10 carbon atoms;
- G, when present, represents an aliphatic hydrocarbon radical comprising from 1 to 10 carbon atoms, which is monovalent when i = 0 or divalent when i = 1;
- the symbols $Z^1$ and $Z^2$, which may be identical or different, represent a monovalent hydrocarbon radical having from 1 to 30 carbon atoms and optionally containing one or more unsaturations and/or one or more fluorine atoms, a hydroxyl group, or a radical $-OR^1$ where $R^1$ represents a linear, cyclic or branched $C_1$-$C_{10}$ hydrocarbon radical, and $Z^1$ and $Z^2$ preferably represent a monovalent hydrocarbon group chosen from the group consisting of alkyl groups having from 1 to 8 carbon atoms, alkenyl groups having from 2 to 6 carbon atoms and aryl groups having from 6 to 12 carbon atoms optionally comprising one or more fluorine atoms, a hydroxyl group, or a radical $-OR^1$ where $R^1$ represents a linear, cyclic or branched $C_1$-$C_{10}$ hydrocarbon radical, and yet more preferably chosen from the group consisting of a methyl, ethyl, propyl, 3,3,3-trifluoropropyl, vinyl, hydroxyl, ethoxyl, methoxyl, xylyl, tolyl and phenyl group;

said organopolysiloxane **O** comprising, per molecule, at least one siloxy unit (I.1) carrying at least one functional group of formula (1.3).

**3.** Method for the prevention of mist formation during the coating of flexible media according to Claim 1 or 2, wherein the compound **F** is chosen from the organic compounds comprising at least one carbon-carbon double bond and at least one carboxylic acid function.

**4.** Method for the prevention of mist formation during the coating of flexible media according to Claim 1 or 2, wherein wherein the compound **F** is chosen from the compounds of formula (II)

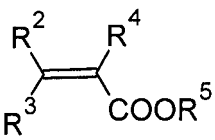 (II)

wherein:

$R^2$, $R^3$ and $R^4$, which may be identical or different, represent a hydrogen atom, a COOH group, or a $C_1$ to $C_6$, preferably $C_1$ to $C_3$, alkyl group, preferably methyl;
$R^5$ represents a hydrogen atom, an alkyl group or an aryl group, wherein the alkyl and the aryl comprise at least one COOH group.

**5.** Method for the prevention of mist formation during the coating of flexible media according to Claim 1 or 2, wherein the compound **F** is chosen from the group consisting of acrylic acid, methacrylic acid, itaconic acid, crotonic acid, 2-carboxyethyl acrylate, 3-carboxypropyl acrylate, maleic acid, fumaric acid, 2-(acryloyloxy)acetic acid, 2-(acryloyloxy)propanoic acid, 3-(acryloyloxy)propanoic acid, 2-(acryloyloxy)-2-phenylacetic acid, 4-(acryloyloxy)butanoic acid, 2-(acryloyloxy)-2-methylpropanoic acid, 5-(acryloyloxy)-pentanoic acid, (E)-but-2-enoic acid, (Z)-prop-1-ene-1,2,3-tricarboxylic acid, cinnamic acid, sorbic acid, 2-hexenoic acid, 2-pentenoic acid, 2,4-pentadienoic acid, ethenesulfonic acid, vinylphosphonic acid, (1-phenyl-vinyl)phosphonic acid, 3-(vinylsulfonyl)propanoic acid, 2-(vinylsulfonyl)acetic acid, 2-(vinylsulfonyl)succinic acid, acetylenedicarboxylic acid and propiolic acid.

**6.** Method for the prevention of mist formation during the coating of flexible media according to Claim 2, wherein the organopolysiloxane **O** is chosen from the organopolysiloxanes comprising siloxy units (I.1) and (1.2) of the following formulae:

$$Y_aZ^1_bSiO_{\frac{4-(a+b)}{2}} \quad (I.1);$$

$$Z^2_cSiO_{\frac{4-c}{2}} \quad (I.2)$$

wherein:

- Y and $Z^1$ and $Z^2$ have the definitions given in Claim 1;
- a = 1 or 2, b = 0, 1 or 2 and a+b = 2 or 3
- c = 2 or 3.

**7.** Method for the prevention of mist formation during the coating of flexible media according to Claim 1 or 2, wherein said liquid silicone composition **X** that is a precursor of silicone coating(s) to which there is added the anti-misting additive **E** as defined according to Claim 1 or 2 comprises:

- at least one radically crosslinkable organopolysiloxane **A1**,
- at least one radical photoinitiator **C1**; and
- optionally at least one adhesion-modulating system **K.**

**8.** Liquid silicone composition **X** that is a precursor of silicone coating(s), comprising:

- at least one organopolysiloxane **A2** crosslinkable by polyaddition, comprising at least two siloxy units of formula (VIII.1), with optionally at least one part of the other units being siloxy units of formula (VIII.2)

$W_aZ^4_bSiO(4-(a+b))/2$ (VIII.1)

$Z^4_cSiO(4-c)/2$ (VIII.2)

Formulae, wherein

- W is an alkenyl group, preferably a vinyl or allyl group,
- the symbols Z4, which may be identical or different, represent a linear or branched alkyl radical containing 1 to 20 carbon atoms, optionally substituted with at least one halogen, preferably fluorine, the alkyl radicals preferably being methyl, ethyl, propyl, octyl and 3,3,3-trifluoropropyl, an optionally substituted cycloalkyl radical containing between 5 and 8 cyclic carbon atoms, an optionally substituted aryl radical containing between 6 and 12 cyclic carbon atoms, and/or an aralkyl part having an alkyl part containing between 5 and 14 carbon atoms and an aryl part containing between 6 and 12 carbon atoms, which is optionally substituted on the aryl part with halogens and/or alkyls,
- a is 1 or 2, preferably equal to 1, b is 0, 1 or 2 and a + b = 1, 2 or 3, and
- c = 0, 1, 2 or 3,

- at least one anti-misting additive **E** as described according to Claim 1 or 2,
- at least one crosslinking organosilicon compound **B2** comprising at least three siloxy units of formula (IX.1), with optionally at least one part of the other units being siloxy units of formula (IX.2):

$HL_cSiO(3-c)/2$ (IX.1)

$L_gSiO_{(4-g)/2}$ (IX.2)

wherein:

- H is a hydrogen atom,
- the symbols L, which may be identical or different, represent a linear or branched alkyl radical containing 1 to 20 carbon atoms, optionally substituted with at least one halogen, preferably fluorine, the alkyl radicals preferably being methyl, ethyl, propyl, octyl and 3,3,3-trifluoropropyl, an optionally substituted cycloalkyl radical containing between 5 and 8 cyclic carbon atoms, an optionally substituted aryl radical containing between 6 and 12 carbon atoms, and/or an aralkyl part having an alkyl part containing between 5 and 14 carbon atoms and an aryl part containing between 6 and 12 carbon atoms, which is optionally substituted on the aryl part with halogens and/or alkyls,
- c = 0, 1 or 2 and
- g = 0, 1, 2 or 3,

- at least one polyaddition catalyst **C2**,
- optionally at least one adhesion-modulating system K, and
- optionally at least one crosslinking inhibitor D.

**9.** Liquid silicone composition **X** according to Claim 1, comprising:

- at least one radically crosslinkable organopolysiloxane **A1**,
- at least one anti-misting additive **E** as described according to Claim 1 or 2,
- optionally at least one radical photoinitiator **C1**, and
- optionally at least one adhesion-modulating system **K.**

**10.** Use of the anti-misting additive **E** as defined according to Claim 1 or 2 for reducing mist formation during the coating of flexible media with a liquid silicone composition **X** that is a precursor of silicone coating(s).

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2004046248 A
- EP 0716115 A
- US 4806391 A
- US 6057033 A
- EP 2015080843 W
- WO 2015004396 A
- WO 2015004397 A
- WO 2016075414 A
- WO 2016071651 A
- WO 2016071652 A
- WO 2016071654 A
- EP 2268743 A
- EP 2367867 A
- EP 2222626 A
- EP 2222756 A
- EP 2222773 A
- EP 2935489 A
- EP 2935490 A
- WO 2015082837 A
- EP 2443207 A
- EP 2443208 A
- EP 562897 A
- EP 2904021 A
- DE 4009889
- EP 0396130 A
- EP 0355381 A
- EP 0105341 A
- FR 2110115
- FR 2526800


### Littérature non-brevet citée dans la description


- Michael addition reactions in macromolecular design for emerging technologies. *Progress in Polymer Science,* 2006, vol. 31 (5), 487-531